# EUROPÄISCHE PATENTSCHRIFT

(11) **EP 1 598 575 B1**
(45) Veröffentlichungstag und Bekanntmachung des Hinweises auf die Patenterteilung: **15.11.2006**
(21) Anmeldenummer: 05010087.4
(22) Anmeldetag: 10.05.2005
(51) Int. Cl.: F16F 15/134

(54) **Torsionsschwingungsdämpfer**
Torsional vibration damper
Amortisseur de vibrations en torsion

(30) Priorität: 19.05.2004 DE 102004024740; 27.11.2004 DE 102004057352
(43) Veröffentlichungstag der Anmeldung: 23.11.2005
(73) Patentinhaber: ZF FRIEDRICHSHAFEN AG, 88046 Friedrichshafen (DE)
(72) Erfinder: Dögel, Thomas, 97688 Bad Kissingen (DE); Vogt, Sebastian, 97616 Bad Neustadt (DE); Carlson, Cora, 97456 Dittelbrunn (DE); Conrad, Matthias, 97273 Kürnach (DE); Damhus, Ralf, 85101 Lenting (DE); Kister, Igor, 97076 Würzburg (DE); Schierling, Bernhard, 97273 Kürnach (DE)

(56) Entgegenhaltungen:
- DE-A1- 10 241 879
- DE-A1- 19 751 029

## Beschreibung

Die vorliegende Erfindung betrifft einen Torsionsschwingungsdämpfer, umfassend eine Primärseite und eine gegen die Wirkung einer Dämpferelementenanordnung bezüglich der Primärseite um eine Drehachse drehbare Sekundärseite, wobei der Dämpferelementenanordnung zur Abstützung nach radial außen bezüglich der Primärseite oder/und der Sekundärseite wenigstens ein Abstützelement zugeordnet ist, das an der Primärseite oder/und der Sekundärseite über eine Rollenanordnung abgestützt ist

Ein derartiger Torsionsschwingungsdämpfer ist aus der DE 197 51 029 A1 bekannt. Die Abstützelemente, mit welchen die in Umfangsrichtung aufeinander folgenden Dämpferfedern einer Dämpferelementenanordnung einerseits bezüglich einander und andererseits nach radial außen und bezüglich der Primärseite bzw. der Sekundärseite abgestützt sind, weisen einen Abstützelementenkörper auf, der in einem Hohlraum eine Achse mit einer darauf vorgesehenen Rolle aufnimmt. Über die Achse ist die Rolle an dem Abstützelementenkörper drehbar getragen. Die Abstützelemente sind somit über die daran vorgesehenen Rollen in einem Rollbewegungszustand entlang eines an der Primärseite bzw. der Sekundärseite gebildeten Abstützbereichs bewegbar. Dies mindert die bei Relativdrehung zwischen Primärseite und Sekundärseite auftretenden Reibkräfte und hat somit eine bessere Schwingungsentkopplung von Primärseite und Sekundärseite zur Folge, da ungewünschte Reibkräfte nicht oder im Wesentlichen nicht vorhanden sind. Ein Problem besteht jedoch darin, dass mit zunehmender Drehzahl die Belastung der Abstützelemente durch die auf diese einwirkende Fliehkraft ebenfalls zunimmt. Diese Belastung wird vor allem dort besonders stark und spürbar, wo die Abstützelementenkörper in Kraftübertragungswechselwirkung mit den Achsen stehen. Dies ist daher problematisch, da aus Gewichtsgründen und zum Minimieren der Fliehkräfte diese Abstützelementenkörper aus Kunststoff hergestellt werden.

Es ist die Aufgabe der vorliegenden Erfindung einen Torsionsschwingungsdämpfer vorzusehen, bei welchem fliehkraftinduzierte Belastungen im Bereich der Abstützelemente verbessert abgefangen werden können.

Erfindungsgemäß wird diese Aufgabe gelöst durch einen Torsionsschwingungsdämpfer, umfassend eine Primärseite und eine gegen die Wirkung einer Dämpferelementenanordnung bezüglich der Primärseite um eine Drehachse drehbare Sekundärseite, wobei der Dämpferelementenanordnung zur Abstützung nach radial außen bezüglich der Primärseite oder/und der Sekundärseite wenigstens ein Abstützelement zugeordnet ist, das an der Primärseite oder/und der Sekundärseite über eine Rollenanordnung abgestützt ist und einen Gleitflächenbereich aufweist, der fliehkraftabhängig in und außer Kontakt mit einem Gegen-Gleitflächenbereich an der Primärseite oder/und der Sekundärseite bringbar ist.

Bei dem erfindungsgemäßen Torsionsschwingungsdämpfer ist also vorgesehen, dass in Abhängigkeit von der Fliehkraft eine Entlastung der Rollenanordnung dadurch geschaffen wird, dass zusätzlich auch noch ein Kontakt zwischen einem Abstützelement und der Primärseite bzw. Sekundärseite dadurch geschaffen wird, dass dann gleitend aneinander sich bewegende Oberflächenbereiche in Kontakt treten und somit für zusätzliche Abstützung sorgen. Mit dieser zusätzlichen Abstützung jedoch wird die Rollenanordnung entlastet, so dass eine durch Fliehkrafteinwirkung induzierte Beschädigung der Rollenanordnung bzw. eines diese aufweisenden Abstützelements praktisch ausgeschlossen werden kann.

Die Rollenanordnung kann sowohl mittels einer Wälz- als auch mittels einer Gleitlagerung auf einer mit Vorzug drehfesten Achse angeordnet sein, wobei sich jeweils eine problemlose Passungsdimensionierung gegenüber der Achse ergibt, sowie eine geringe Empfindlichkeit gegenüber tribologischen Einflüssen, wie beispielsweise der Oberflächengüte eines Gegen-Gleitflächenbereichs eines Abstützbereiches an Primärseite bzw. Sekundärseite.

Bei Verwendung einer Wälzlagerung ist der Reibungseinfluss besonders gering. Mit einer Gleitlagerung ergibt sich allerdings eine höhere Belastbarkeit unter Fliehkrafteinwirkung, so dass eine zusätzliche Abstützung durch in Kontakt getretenem Abstützelement mit der Primärseite bzw. Sekundärseite zugunsten gleitend aneinander sich bewegender Oberflächenbereiche erst bei deutlich höherer Drehzahl als bei einer Wälzlagerung erfolgen muss. Dadurch können nicht nur Torsionsschwingungen im unteren Drehzahlbereich einer Brennkraftmaschine mit hoher Entkopplungsgüte gedämpft werden, sondern auch Torsionsschwingungen im mittleren Drehzahlbereich, also etwa bei 2000 bis 2500 U/min. Als Material für eine derartige Gleitlagerung kann PTFE (Teflon) verwendet werden, aber auch Kunststoff oder speziell oberflächenbearbeitetes Metall, das ggf. beschichtet sein kann.

Trotz eines Gleitreibungseinflusses bei der Gleitlagerung ist dennoch folgender wesentliche Vorteil gegenüber einer rein gleitenden Bewegung vorhanden:

Durch Integration von Gleitlagern in einem Abstützelement kommt es zu einer erheblichen Reibungsreduzierung bei Drehmomenteinleitung in beaufschlagte Dämpferelemente einer Dämpferelementenanordnung, da der Kontakt mit dem Gegen-Gleitflächenbereich des jeweiligen Abstützbereiches als Rollbewegung erfolgt. Diese Rollbewegung wird dazu genutzt, einen dem Gleitlager zugeordneten und die mit Vorzug drehfeste Achse umschließenden Ring mit einer Umfangskraft zu beaufschlagen, durch welche dieser Ring um die Achse gedreht wird. Dabei wirkt allein zwischen dem Ring und der Achse eine Reibung, deren Einfluß allerdings dadurch gemindert ist, dass zwischen dem Außendurchmesser des Rings und dem Außendurchmesser der Achse ein Übersetzungsverhältnis vorliegt. Dieses ist bei der vorliegenden Anwendungsweise des Gleitlagers mindestens 1,1 : 1, kann allerdings auch größer ausgebildet werden. Bei Verwendung einer Mehrzahl von Gleitlagern an einem Abstützelement sollte allerdings jeweils das gleiche Übersetzungsverhältnis vorliegen, jedoch können bei Dämpferelementenanordnungen mit einer Mehrzahl von Abstützelementen dieselben mit unterschiedlichen Übersetzungsverhältnissen ausgebildet sein.

Bei einer besonders effizient wirksamen Ausgestaltungsform kann zum Bereitstellen des fliehkraftabhängigen Umschaltens zwischen einer Rollbewegung und einer Gleitbewegung bzw. kombinierten Roll/Gleit-Bewegung vorgesehen sein, dass an der Primärseite oder/und der Sekundärseite ein in Umfangsrichtung um die Drehachse sich erstreckender Abstützbereich vorgesehen ist, entlang welchem das wenigstens eine Abstützelement bewegbar ist, wobei der Abstützbereich einen Rollflächenbereich und den Gegen-Gleitflächenbereich bereitstellt und der Rollflächenbereich fliehkraftabhängig bezüglich des Gegen-Gleitflächenbereichs verlagerbar ist.

Um diese Verlagerbarkeit des Rollflächenbereichs in einfacher Art realisieren zu können, wird vorgeschlagen, dass der Rollflächenbereich wenigstens ein Rollflächenelement umfasst, das an einer Tragestruktur gegen die Rückstellkraft einer elastischen Anordnung im Wesentlichen radial verlagerbar getragen ist. Dabei kann dann vorzugsweise vorgesehen sein, dass die elastische Anordnung eine Rückstellkraft bereitstellt, die einer auf das wenigstens eine Abstützelement einwirkenden Fliehkraft im Wesentlichen entgegengerichtet ist. Die Abstimmung zwischen der Rückstellkraft und der im Drehbetrieb auf ein Abstützelement einwirkenden Fliehkraft kann zum möglichst zuverlässigen Entlasten des Abstützelements derart vorgenommen werden, dass die durch die elastische Anordnung bereitgestellte Rückstellkraft bis zum Erreichen einer auf das wenigstens eine Abstützelement einwirkenden Grenz-Fliehkraft oder/und einer Grenz-Drehzahl ausreicht, um den Gleitflächenbereich außer Anlagekontakt mit dem Gegen-Gleitflächenbereich zu halten.

Eine auch unter Fliehkrafteinwirkung stabile Führung des wenigstens einen Abstützelements kann dadurch realisiert werden, dass der Gegen-Gleitflächenbereich in axialer Richtung beidseits des Rollflächenbereichs jeweils einen Flächenabschnitt aufweist. Dabei kann vorgesehen sein, dass zwischen den Flächenabschnitten des Gegen-Gleitflächenbereichs eine das wenigstens eine Rollflächenelement und die elastische Anordnung aufnehmende Aussparung vorgesehen ist.

Bei dem erfindungsgemäßen Torsionsschwingungsdämpfer kann weiterhin das wenigstens eine Abstützelement so ausgebildet sein, dass die Rollenanordnung eine Mehrzahl von Rollorganen umfasst, die bei Umfangsbewegung des wenigstens einen Abstützelements in begrenztem Bewegungsbereich bezüglich eines Abstützelementenkörpers des wenigstens einen Abstützelements in der Umfangsbewegungsrichtung desselben bewegbar sind und bei Erreichen eines Endes des Bewegungsbereichs gegen weitere Rollbewegung blockiert sind. Das Blockieren der Rollorgane gegen weitere Abrollbewegung bezüglich des Abstützelementenkörpers oder/und bezüglich des Abstützbereichs an der Primärseite bzw. der Sekundärseite hat zur Folge, dass bei weiter anhaltender Umfangsbewegung des Abstützelements tatsächlich keine Rollbewegung mehr stattfinden wird, sondern eine Gleitbewegung. Allein dadurch wird eine zusätzliche Gleitreibungskomponente eingeführt, die nach Art einer verschleppt wirkenden Reibeinrichtung wirksam ist, nämlich erst dann, wenn ein bestimmtes Relativbewegungsausmaß zwischen Primärseite und Sekundärseite, das selbstverständlich auch korrespondiert mit einem bestimmten Bewegungsausmaß eines jeweiligen Abstützelements, durchlaufen ist. Die Folge davon ist, dass insbesondere bei Auftreten größerer Drehungleichförmigkeiten, die eine größere Relativdrehung zwischen Primärseite und Sekundärseite erzwingen, eine zusätzliche Reibkraft bereitgestellt werden kann und insofern die Abstützelemente selbst als verschleppt wirkende Reibeinrichtung wirksam sind.

Bei dieser Ausgestaltung der Abstützelemente kann weiter vorgesehen sein, dass die Rollenanordnung bezüglich des Abstützbereichs über einen Abrollschlitten abgestützt ist und dass bei Erreichen des Endes des Bewegungsbereichs und anhaltender Umfangsbewegung des wenigstens einen Abstützelements dieses den zugeordneten Abrollschlitten zur Durchführung einer Gleitbewegung entlang des Abstützbereichs mitnimmt. Auf diese Art und Weise können die Rollorgane selbst vor Durchführung einer diese möglicherweise übermäßig verschleißenden Gleitbewegung geschützt werden. Die Gleitbewegung wird tatsächlich im Übergang zwischen dem Abrollschlitten und der Primärseite bzw. der Sekundärseite erfolgen.

Gemäß einer alternativen Ausgestaltungsform kann der erfindungsgemäße Torsionsschwingungsdämpfer so ausgebildet sein, dass die Rollenanordnung wenigstens ein an einem Abstützelementenkörper über eine elastische Anordnung getragenes Rollorgan umfasst, mit welchem das wenigstens eine Abstützelement entlang eines um die Drehachse sich erstreckenden Abstützbereichs an der Primärseite oder/und der Sekundärseite bewegbar ist, wobei die elastische Anordnung eine Rückstellkraft bereitstellt, welche den Abstützelementenkörper mit dem daran vorgesehenen Gleitflächenbereich gegen Fliehkrafteinwirkung außer Anlagekontakt mit dem den Gegen-Gleitflächenbereich bereitstellenden Abstützbereich hält. Hier ist von besonderem Vorteil, dass der an der Primärseite oder/und der Sekundärseite vorgesehene Abstützbereich nicht mit irgendwelchen beweglichen Baugruppen ausgestattet sein muss. Die fliehkraftbedingte Relativverlagerung zweier Systembereiche findet in den Abstützelementen selbst statt.

Auch hier kann beispielsweise vorgesehen sein, dass die Rollenanordnung wenigstens ein an einem Abstützelementenkörper über eine elastische Anordnung getragenes Rollorgan umfasst, mit welchem das wenigstens eine Abstützelement entlang eines um die Drehachse sich erstreckenden Abstützbereichs an der Primärseite oder/und der Sekundärseite bewegbar ist, wobei die elastische Anordnung eine Rückstellkraft bereitstellt, welche den Abstützelementenkörper mit dem daran vorgesehenen Gleitflächenbereich gegen Fliehkrafteinwirkung außer Anlagekontakt mit dem den Gegen-Gleitflächenbereich bereitstellenden Abstützbereich hält, wobei vorzugsweise die Abstimmung der elastischen Anordnung derart gewählt wird, dass die durch die elastische Anordnung bereitgestellte Rückstellkraft ausreicht, um bis zum Erreichen einer auf die Abstützelementenkörper einwirkenden Grenz-Fliehkraft oder/und einer Grenz-Drehzahl den Gleitflächenbereich außer Anlagekontakt mit dem Gegen-Gleitflächenbereich zu halten.

Bei einer weiteren alternativen Ausgestaltungsform wird vorgeschlagen, dass an der Primärseite oder/und der Sekundärseite ein in Umfangsrichtung um die Drehachse herum sich erstreckender Abstützbereich mit der eine Mehrzahl von Rollorganen aufweisenden Rollenanordnung vorgesehen ist, wobei das wenigstens eine Abstützelement bei Relativdrehung zwischen Primärseite und Sekundärseite in Umfangsrichtung auf den Rollorganen bewegbar ist. Hier weisen also die Abstützelemente selbst keine Rollenanordnungen auf, da die Rollorgane bereits an der Primärseite bzw. der Sekundärseite vorhanden sind. Dies hat zur Folge, dass die Abstützelemente selbst leichter gebaut sein können und somit geringere Fliehkräfte wirken.

Bei dieser Ausgestaltungsform kann weiter vorgesehen sein, dass das wenigstens eine Abstützelement einen Rollflächenbereich und den Gleitflächenbereich aufweist, der über eine elastische Anordnung bezüglich des Rollflächenbereichs getragen ist, wobei die elastische Anordnung eine einer Fliehkrafteinwirkung auf den Gleitflächenbereich entgegenwirkende Rückstellkraft bereitstellt. Auch hier ist die Abstimmung der elastischen Anordnung vorzugsweise derart, dass die durch die elastische Anordnung bereitgestellte Rückstellkraft bis zum Erreichen einer auf den Gleitflächenbereich einwirkenden Grenz-Fliehkraft oder/und einer Grenz-Drehzahl ausreicht, um den Gleitflächenbereich des wenigstens einen Abstützelements außer Anlagekontakt mit dem an dem Abstützbereich vorgesehenen Gegen-Gleitflächenbereich zu halten.

Wie vorangehend bereits dargelegt, ist es insbesondere zum Bedämpfen sehr starker Drehungleichförmigkeiten, beispielsweise ausgelöst durch Lastwechselzusände oder durch das Durchlaufen des Resonanzfrequenzbereichs des Torsionsschwingungsdämpfers, vorteilhaft, eine übermäßige Relativdrehung zwischen Primärseite und Sekundärseite durch das Einführen einer zusätzlichen Dämpfungskomponente, nämlich einer Reibkraft, zu unterbinden. Hierzu wird gemäß einem weiteren Aspekt der vorliegenden Erfindung vorgeschlagen,dass eine Reibeinrichtung vorgesehen ist, welche wenigstens ab Erreichen eines Grenz-Relativdrehwinkels zwischen Primärseite und Sekundärseite eine einer weiteren Relativdrehung entgegenwirkende Reibkraft erzeugt.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Teil-Längsschnittansicht eines Torsionsschwingungsdämpfers;
- Fig.2: in vergrößerter Darstellung den radial äußeren Bereich des Torsionsschwingungsdämpfers der Fig. 1;
- Fig. 3: ein bei dem Torsionsschwingungsdämpfer der Figuren 1 und 2 einsetzbares elastisches Element;
- Fig. 4: in ihren Darstellungen a) und b) schematisch verschiedene Betriebszustände des in Fig. 1 gezeigten Torsionsschwingungsdämpfers mit einer zusätzlichen verschleppt wirkenden Reibeinrichtung;
- Fig. 5: eine perspektivische, teilweise im Schnitt dargestellte Ansicht eines Abstützelements;
- Fig. 6: eine Teil-Schnittansicht eines weiteren alternativ ausgestalteten Abstützelements;
- Fig. 7: eine der Fig. 6 entsprechende Ansicht eines weiteren alternativ ausgestalteten Abstützelements;
- Fig. 8: eine perspektivische, teilweise im Schnitt dargestellte Ansicht eines Abstützelements sowie Einzelheiten desselben;
- Fig.9: wie Fig. 8, aber mit alternativer Ausgestaltung des Abstützelementes;
- Fig.10: wie Fig. 8, aber mit einer weiteren alternativen Ausgestaltung des Abstützelementes;
- Fig.11: wie Fig. 8, aber mit einer weiteren alternativen Ausgestaltung des Abstützelementes;
- Fig.12: wie Fig. 8, aber mit einer weiteren alternativen Ausgestaltung des Abstützelementes;
- Fig.13: wie Fig. 8, aber mit einer weiteren alternativen Ausgestaltung des Abstützelementes;
- Fig.14: wie Fig. 8, aber mit einer weiteren alternativen Ausgestaltung des Abstützelementes;
- Fig. 15: eine Seitenansicht eines weiteren alternativ ausgestalteten Abstützelements;
- Fig.16: eine Schnittansicht eines Rollorganträgers des in Fig. 8 dargestellten Abstützelements,
- Fig. 17: eine der Fig. 8 entsprechende Ansicht eines alternativ ausgestalteten Abstützelements;
- Fig. 18: eine weitere Schnittansicht eines erfindungsgemäß ausgestalteten Abstützelements;
- Fig. 19: eine Abwandlung des in Fig. 11 gezeigten Abstützelements;
- Fig. 20: eine Schnittansicht des in Fig. 12 gezeigten Abstützelements, geschnitten längs einer Linie XIII-XIII in Fig. 12;
- Fig.21: eine Schnittansicht einer abgewandelten Ausgestaltungsform eines Torsionsschwingungsdämpfers bzw. Abstützelements;
- Fig. 22: in ihren Diagrammen a) bis d) verschiedene Ausgestaltungsvarianten eines Torsionsschwingungsdämpfers hinsichtlich der Auswahl der Abstützelemente;
- Fig. 23: ein Abstützelement mit Fluiddurchlässen für viskoses Medium;

- Fig. 24 wie Fig. 23,: aber mit konstruktiv anderer Ausbildung der Fluiddurchlässe.

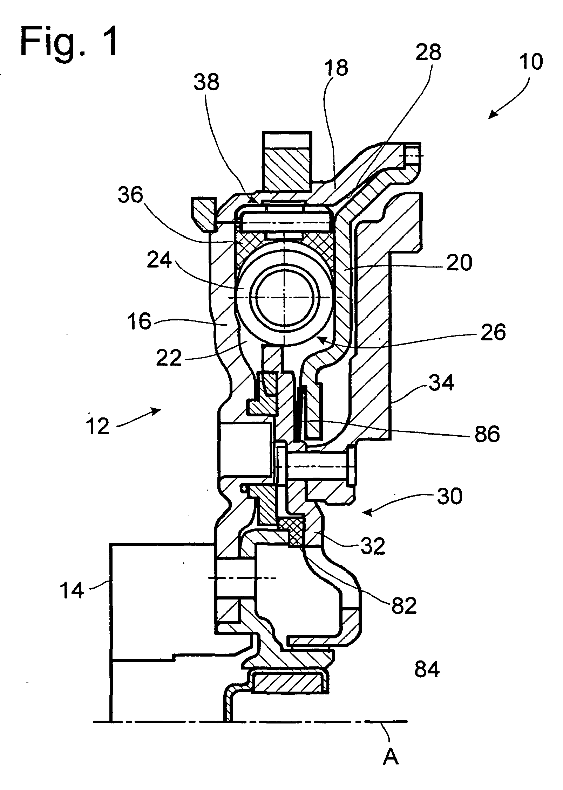

In Fig. 1 ist ein Torsionsschwingungsdämpfer, im Allgemeinen auch Zweimassenschwungrad genannt, mit 10 bezeichnet. Der Torsionsschwingungsdämpfer 10 umfasst eine Primärseite 12, die mit einer Antriebswelle 14, beispielsweise einer Kurbelwelle, zur Drehung um eine Drehachse A verbunden bzw. verbindbar ist. Diese Primärseite 12 wiederum weist ein Deckscheibenelement 16 auf, das radial innen an die Antriebswelle 14 anzubinden ist und in einem radial äußeren Abschnitt 18 mit einem weiteren Deckscheibenelement 20 fest verbunden ist. Die beiden Deckscheibenelemente 18, 20 begrenzen einen Volumenbereich 22, in welchem die in Umfangsrichtung aufeinander folgenden Dämpferelemente 24, beispielsweise Schraubendruckfedern, einer allgemein mit 26 bezeichneten Dämpferelementenanordnung aufgenommen sind. Zwischen den beiden Deckscheibenelementen 16, 20 ist radial außen ein kegelartiger Raum 28 gebildet, in welchem Ablagerungen sich ansammeln können.

Eine Sekundärseite 30 des Torsionsschwingungsdämpfers 10 umfasst ein Zentralscheibenelement 32. Dieses greift radial außen in den Volumenbereich 22 zur Wechselwirkung mit den Dämpferelementen 24 ein und ist radial innen axial und radial bezüglich der Primärseite 12 gelagert. Radial innerhalb des Deckscheibenelements 20 ist das Zentralscheibenelement 32 mit einer Schwungmasse 34 fest verbunden, die eine Druckplattenbaugruppe einer nicht weiter dargestellten Reibungskupplung tragen kann.

Sowohl an den Deckscheibenelementen 16, 20, also der Primärseite 12, als auch am Zentralscheibenelement 32, also der Sekundärseite 30, sind jeweilige Abstützbereiche ausgebildet, welche in Umfangsrichtung mit den Dämpferelementen 24 der Dämpferelementenanordnung 26 zusammenwirken. Diese Abstützung erfolgt aber nicht direkt, sondern über so genannte Abstützelemente 36. Diese Abstützelemente sorgen für eine gleichmäßige Beaufschlagung der Dämpferelemente 24 durch die Primärseite 12 bzw. die Sekundärseite 30. Weiter kann die Dämpferelementenanordnung 26 mehrere Gruppen von Dämpferelementen 24 umfassen, wobei jede dieser Gruppen dann in Umfangsrichtung aufeinander folgende und über Abstützelemente 36 aneinander abgestützte Dämpferelemente 24 umfasst. Sowohl die Abstützelemente 36, die eine Abstützung der Dämpferelemente 24 bezüglich der Primärseite 12 bzw. der Sekundärseite 30 realisieren, als auch die Abstützelemente 36, die eine gegenseitige Umfangsabstützung einzelner Dämpferelemente 24 aneinander realisieren, können nach radial außen hin an der Primärseite 12 abgestützt sein, um diese gegen Fliehkrafteinwirkung in einem definierten radialen Zustand zu halten. Hierzu ist an dem Abschnitt 18 des Deckscheibenelements 16 ein allgemein mit 38 bezeichneter und nachfolgend noch weiter detailliert erläuterter Abstützbereich ausgebildet. Die Art und Weise der Abstützung der Abstützelemente 36 bezüglich dieses Abstützbereichs 38 und der Aufbau der Abstützelemente 36 selbst werden nachfolgend detailliert beschrieben.

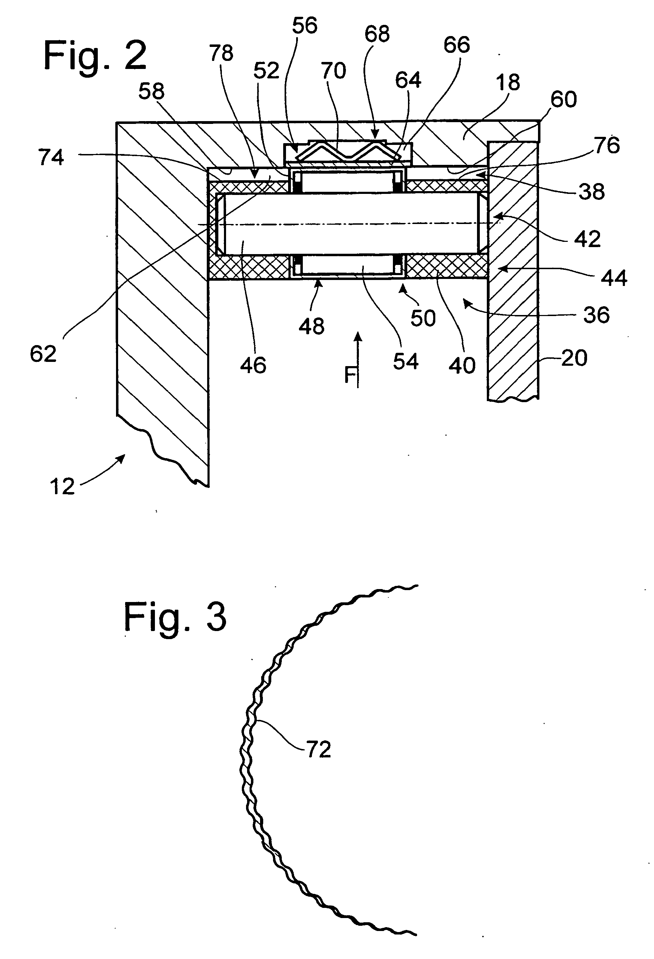

In Fig. 2 erkennt man in vergrößerter und etwas vereinfachter Ansicht den radial äußeren Bereich der Primärseite 12. Weiter erkennt man detaillierter das Abstützelement 36. Dieses umfasst einen beispielsweise aus Kunststoff aufgebauten Abstützelementenkörper 40. An diesem sind beispielsweise zwei in Umfangsrichtung um die Drehachse A aufeinander folgende Rollorgane 42 einer allgemein mit 44 bezeichneten Rollenanordnung vorgesehen. Jedes dieser Rollorgane 42 umfasst eine Achse 46, die an ihren beiden seitlichen Endbereichen im Abstützelementenkörper 40 drehbar getragen ist, und umfasst weiterhin einen Rollbereich 48. Dieser Rollbereich 48 kann beispielsweise integral mit der Achse 46 ausgebildet sein, kann beispielsweise aber auch ein Rolllager 50 mit einer Lageraußenschale 52 umfassen, die über eine Mehrzahl von Wälzkörpern 54, beispielsweise Kugeln, Tonnen oder Nadeln, auf der Achse 46 drehbar getragen ist. Die axial im zentralen Bereich des Abstützelements 36 vorgesehene Lageraußenschale 52 bzw. der Rollbereich 48 ist allgemein dazu vorgesehen, bei Umfangsbewegung des Abstützelements 36, welche bei einer Relativdrehung zwischen der Primärseite 12 und der Sekundärseite 30 und der dabei auftretenden Kompression der Dämpferelemente 24 stattfinden wird, eine Abrollbewegung am Abstützbereich 38 auszuführen, so dass diese Umfangsbewegung unter möglichst geringem Widerstand stattfinden kann.

Man erkennt in Fig. 2 weiter, dass der Abstützbereich 38 grundsätzlich in zwei Bereiche unterteilt werden kann. Zentral ist ein Rollflächenbereich 56 vorgesehen, und an beiden axialen Seiten des Rollflächenbereichs 56 sind jeweils Flächenabschnitte 58, 60 eines allgemein mit 62 bezeichneten Gegen-Gleitflächenbereichs vorgesehen. Der Rollflächenbereich 56 und die Abschnitte 58, 60 des Gegen-Gleitflächenbereichs 62 erstrecken sich in Umfangsrichtung um die Drehachse A vorzugsweise vollständig durchlaufend.

In Fig. 2 erkennt man weiterhin, dass der Rollflächenbereich 56 im Wesentlichen durch ein oder mehrere plattenartige Rollflächenelemente 64 gebildet ist, die in einer Aussparung 66 des Abschnitts 18 des Deckscheibenelements 16 aufgenommen sind. Dabei stützen sich jedoch die Rollflächenelemente 64 nicht direkt an dem Abschnitt 18 ab, sondern es ist eine elastische Anordnung 68 vorgesehen, welche diese Abstützung derart vornimmt, dass im unbelasteten Zustand beispielsweise der Rollflächenbereich 56 in radialer Richtung bündig mit den beiden Flächenbereichen 58, 60 des Gegen-Gleitflächenbereichs 62 liegt.

Die elastische Anordnung 68 kann ein oder mehrere in Umfangsrichtung aufeinander folgende Federblechelemente 70 aufweisen, die eine Radialelastizität vorsehen und somit den Rollflächenelementen 68 eine gewisse Radialbewegung gestatten. Hier können selbstverständlich auch andere elastische Elemente, wie z.B. Elastomerlagen, das in Fig. 3 gezeigte ringartig ausgestaltete Wellfederelement 72 oder eine Mehrzahl von Schraubendruckfedern o.dgl. vorgesehen sein.

Die Dimensionierung des Abstützelements 36 ist derart, dass der Rollbereich 58, also beispielsweise die Lageraußenschale 52 des Rolllagers 50, dem Rollflächenbereich 56 gegenüber liegt bzw. dort anliegt. Beidseits dieses Rollflächenbereichs 52 liegen den Abschnitten 58, 60 des Gegen-Gleitflächenbereichs 62 Flächenabschnitte 74, 76 eines Gleitflächenbereichs 78 des Abstützelements 36 gegenüber, jedoch mit radialem Abstand, wie in Fig. 2 erkennbar.

Die Funktionsweise des in den Figuren 1 und 2 dargestellten Torsionsschwingungsdämpfers ist wie folgt:

Treten Drehschwingungen auf, die durch Relativdrehung der Primärseite 12 bezüglich der Sekundärseite 30 abgefangen werden sollen, so wird diese Relativdrehung unter Kompression der Dämpferelemente 24 und dabei einer Umfangsbewegung der Abstützelemente 36 entlang des Abstützbereichs 38 erfolgen. Diese Umfangsbewegung wird zunächst eine Abrollbewegung der Rollbereiche 48 der verschiedenen Rollorgane 42 entlang des Rollflächenbereichs 56 sein. Mit zunehmender Drehzahl nimmt jedoch auch die auf die Abstützelemente 36 einwirkende und im Allgemeinen nach radial außen gerichtete Fliehkraft F zu. Die Folge davon ist, dass mit ansteigender Fliehkraft F die elastische Anordnung 68 zunehmend komprimiert wird, welche grundsätzlich eine dieser Fliehkraft F entgegengerichtete, also nach radial innen gerichtete Rückstellkraft bereitstellt. Bei Kompression der elastischen Anordnung 68 tauchen die Rollflächenelemente 64 verstärkt in die Aussparung 66 ein. Die Folge davon ist, dass die Flächenabschnitte 74, 76 am Abstützelementenkörper 40 sich mit zunehmender Fliehkraft den Flächenabschnitten 58, 60 des Abstützbereichs 38 annähern. Wird eine bestimmte Grenz-Fliehkraft erreicht, die korrespondiert mit einer bestimmten Grenz-Drehzahl, wird ein Anlagekontakt zwischen den Flächenabschnitten 74, 76 einerseits und den Flächenabschnitten 58, 60 andererseits erzeugt. Ab Bereitstellung dieses Anlgagekontakts wird dann eine weitere Radialverlagerung der Abstützelemente 36 nicht mehr möglich sein. Die auf die Rollorgane 42 einwirkende Belastung ist somit begrenzt durch die in diesem Moment der Erzeugung des Anlagekontakts bereitgestellte Rückstellkraft der elastischen Anordnung 68 bzw. der einzelnen Federelemente 70, 72 oder dergleichen. D.h., weiter ansteigende Fliehkräfte führen lediglich zu einer verstärkten Anpressung des Abstützelementenkörpers 40 mit seinem Gleitflächenbereich 78 gegen den Gegen-Gleiflächenbereich 62 des Abstützbereichs 38.

Durch geeignete Auswahl der Feder- bzw. Elastizitätscharakteristik der elastischen Anordnung 68 kann der Übergang in den Zustand, in dem zusätzlich ein Gleitkontakt der Abstützelemente 36 am Abstützbereich 38 erzeugt wird, so gewählt werden, dass dieser in einem Zustand auftritt, in welchem die auf die Rollorgane 42 und somit auch die Abstützelementenkörper 40 einwirkenden Belastungen noch nicht zu einer Schädigung dieser Systembereiche führen können, und in welchem dafür gesorgt ist, dass die dann auftretende zusätzliche Gleitreibungskraft eine wesentliche Beeinträchtigung der Schwingungsdämpfungscharakteristik nicht hervorrufen wird. Im Allgemeinen ist hier zu berücksichtigen, dass in Bereichen höherer Drehzahl, also beispielsweise von mehr als 3.000 Umdrehungen pro Minute, eine Drehschwingungsdämpfung allgemein nicht mehr erforderlich ist bzw. eine mit geminderter Qualität durchgeführte Drehschwingungsdämpfung Komforteinbußen praktisch nicht zur Folge haben wird, da in diesem Betriebsbereich nicht ausreichend bedämpfte Schwingungen praktisch nicht mehr wahrnehmbar sind.

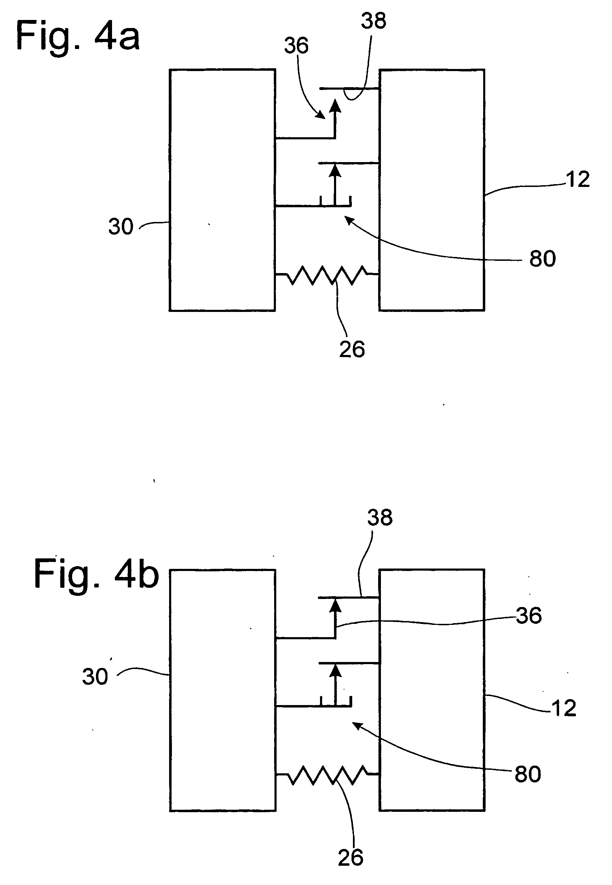

Die Fig. 4 zeigt in ihren Diagrammen a) und b) in prinzipartiger Darstellung noch einmal die Wirkungsweise des vorangehend beschriebenen Torsionsschwingungsdämpfers 10. Man erkennt schematisch dargestellt die Primärseite 12 und die Sekundärseite 30 und die dazwischen wirkende Dämpferelementenanordnung 26. Weiter erkennt man den in der dargestellten Ausgestaltungsform an der Primärseite 12 ausgestalteten Abstützbereich 38 und die Abstützelemente 36. Das Diagramm a) veranschaulicht den Zustand geringer Drehzahl, also den Zustand, in welchem eine Reibwechselwirkung der Abstützelemente 36 mit dem Abstützbereich 38 noch nicht vorhanden ist und lediglich die Abrollbewegung stattfinden wird. Im Diagramm b) ist der Zustand veranschaulicht, in welchem bei dann erhöhter Drehzahl und entsprechend erhöhter Fliehkraft die Abstützelemente 36 in Gleitreibungskontakt mit dem Abstützbereich 38 treten und somit zusätzlich zur Abrollbewegung eine Gleitreibungskomponente einführen und weiterhin durch die unmittelbare Abstützung am Abstützbereich 38 für eine Entlastung der Rollenanordnung sorgen.

Weiter erkennt man in Fig. 4 eine allgemein mit 80 bezeichnete Reibeinrichtung, beispielsweise Trockenreibeinrichtung. Diese sorgt dafür, dass durch das Vorhandensein einer zusätzlichen Reibkraftkomponente kritische Relativbewegungszustände zwischen der Primärseite 12 und der Sekundärseite 30 abgefangen werden können. Diese kritischen Zustände können beispielsweise beim Durchlaufen der Resonanz oder beim Auftreten von Lastwechselzuständen zu einer übermäßigen Auslenkung zwischen Primärseite 12 und Sekundärseite 30 führen. Durch das Vorhandensein einer zusätzlichen Reibkraftkomponente kann dieser Auslenkung entgegengewirkt werden. Beispielsweise kann diese Reibkraft bei der in Fig. 1 dargestellten Ausgestaltungsform des Torsionsschwingungsdämpfers 10 durch die der Radiallagerung und der Axiallagerung dienenden Lagerungskomponenten 82, 84 bereitgestellt werden, ebenso wie durch ein Federelement 86, das eine Vorspannkraft zwischen dem Zentralscheibenelement 32 und dem Deckscheibenelement 20 erzeugt. An diesen angesprochenen Stellen ist eine durch Auswahl der reibend aneinander abgleitenden Materialien einstellbare permanente Reibwechselwirkung vorhanden. Wie in Fig. 4 angedeutet, kann die Reibeinrichtung 80 aber auch verschleppt wirkend ausgebildet sein und erst bei Erreichen eines bestimmten Relativdrehwinkels zwischen Primärseite 12 und Sekundärseite 30 wirksam werden. Der Aufbau derartiger verschleppt wirkender Reibeinrichtungen ist im Stand der Technik hinlänglich bekannt und braucht hier nicht weiter erläutert werden.

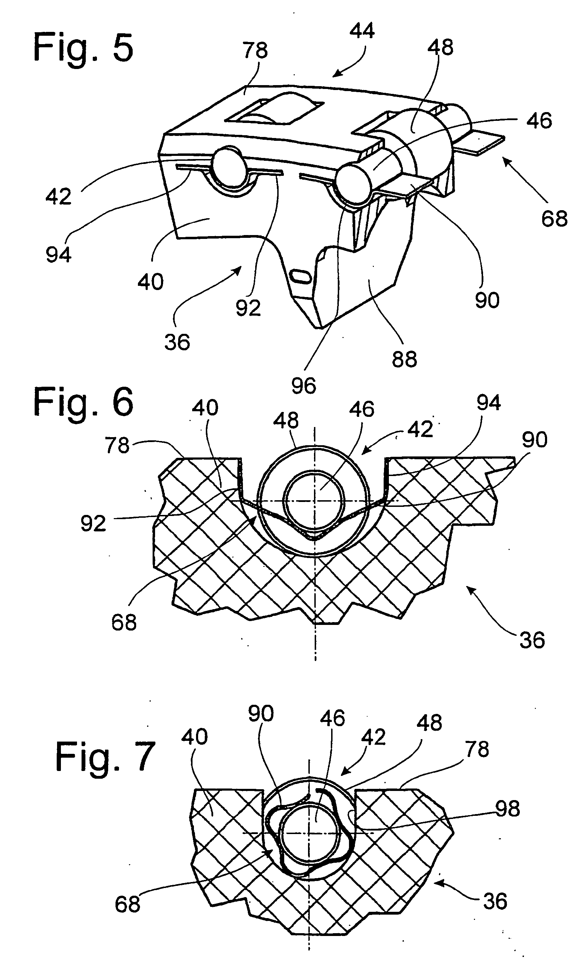

In Fig. 5 ist eine alternative Ausgestaltungsart eines Abstützelements 36 gezeigt. Man erkennt den beispielsweise aus Kunststoffmaterial gebildeten Abstützelementenkörper 40 mit dem nach radial innen greifenden Abstützvorsprung 88, an welchem in Umfangsrichtung aufeinander unmittelbar folgende Dämpferelemente 24 sich abstützen können. Die Rollenanordnung 44 umfasst hier beispielsweise zwei Rollorgane 42 mit ihren Achsen 46 und den wie vorangehend bereits geschildert daran vorgesehenen Rollbereichen 48 oder Lagern 50.

Die Achsen 46 sind bei dieser Ausgestaltungsform jedoch nicht unmittelbar an dem Abstützelementenkörper 40 getragen, sondern über halbschalenartig ausgestaltete Federelemente 90. Diese sind mit Endschenkeln 92, 94 in Aussparungen des Abstützelementenkörpers 40 getragen und stützen mit einem Schalenabschnitt 96 die Achsen 46. Die Federelemente 90 stellen hier also die elastische Anordnung 68 bereit, welche nunmehr eine einer Fliehkrafteinwirkung auf den Abstützelementenkörper 40 entgegenwirkende Rückstellkraft bereitstellen. Der Abstützbereich 38 beispielsweise an der Primärseite 12 umfasst hier eine beispielsweise zylindrisch ausgestaltete durchgehende Fläche, in deren axial zentralen Bereich die Rollbereiche 48 der Rollorgane 42 abrollen. Beidseits und zwischen den Rollbereichen 48 bildet eine Oberfläche des Abstützelementenkörpers 40 den Gleitflächenbereich 78 desselben. Bei Ansteigen der Fliehkraft verlagern sich entgegen der Rückstellkrafteinwirkung der Federelemente 90 die Rollorgane 42 bezüglich des Abstützelementenkörpers 40, so dass der Abstützelementenkörper 40 zunehmend nach radial außen bewegt wird und mit seinem Gleitflächenbereich 78 sich dem hier nicht dargestellten Gegen-Gleitflächenbereich 62 annähert, bis bei Erreichen der angesprochenen Grenz-Fliehkraft wieder der Anlagekontakt und somit das Miteinführen einer Gleitreibungsabstützung auftritt. Hier ist also die Radialelastizität nicht in den Abstützbereich 38 integriert, sondern in die Abstützelemente 36 selbst.

Eine abgewandelte Ausgestaltungsform eines derartigen Abstützelements 36 ist in Fig. 6 gezeigt. Man erkennt hier, dass in Zuordnung zu den einzelnen Rollorganen 36 Aussparungen im Abstützelementenkörper 40 gebildet sind, in welchen wiederum beispielsweise aus Federblech geformte Federelemente 90 eingesetzt sind. Diese in ihrer Gesamtheit nunmehr die elastische Anordnung 68 bereitstellenden Federelemente 90 weisen eine v- bzw. dachartige Formgebung auf und sind mit ihren Endschenkeln 92, 94 an Seitenwandungen der die Achsen 46 der Rollorgane 42 aufnehmenden Aussparungen getragen bzw. festgelegt. Auch hier kann eine zunehmende Fliehkrafteinwirkung auf die Abstützelementenkörper 40 unter Verformung der Federelemente 90 zu einer Radialverlagerung der Abstützelementenkörper 40 bezüglich der Rollorgane 46 und somit auch bezüglich des diese noch stützenden Abstützbereichs 38 an der Primärseite führen.

Bei der in Fig. 7 gezeigten Ausgestaltungsvariante sind die Federelemente 90 wiederum in die zum Gleitflächenbereich 78 hin offenen Aussparungen 98 im Abstützelementenkörper 40 eingesetzt und sind nunmehr als um die Achsen 46 gebogene Wellfederblechelemente ausgestaltet. Auch diese sind unter Fliehkrafteinwirkung verformbar und gestatten somit die Radialverlagerung des Abstützelementenkörpers 40 mit seinem Gleitflächenbereich 78 auf den Abstützbereich 38 an der Primärseite zu.

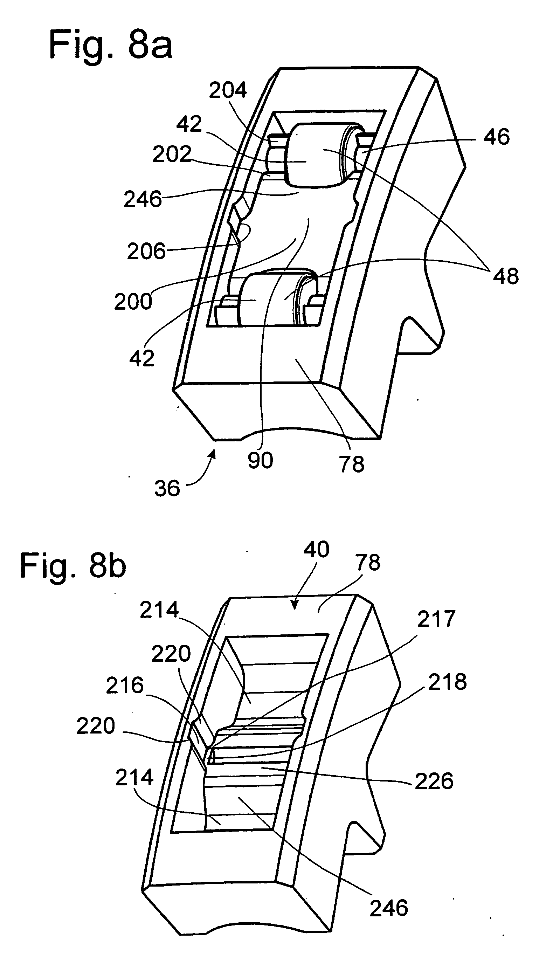

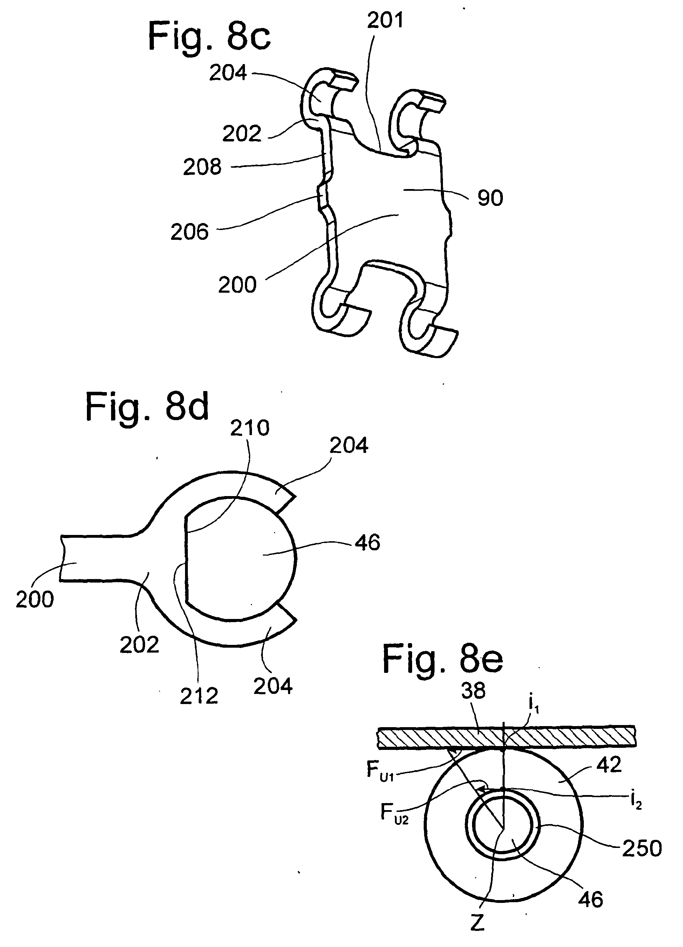

Bei der Ausgestaltungsvariante gemäß Fig. 8 ist, wie aus Fig. 8c ersichtlich, als elastische Anordnung 68 ein Federelement 90 vorgesehen, das über einen zentralen Verbindungsteil 200 verfügt, der an beidseitigen Umfangsbegrenzungen 201 in Endschenkel 202 übergeht, an welchen jeweils eine Aufnahme 204 für je eine Achse 46 eines Rollorgans 42 vorgesehen ist, wobei jeweils zwei dieser Endschenkel 202, in Achsrichtung betrachtet, zueinander beabstandet sind. Des weiteren finden sich am zentralen Verbindungsteil 200 zwischen den beidseitigen Umfangsbegrenzungen 201, vorzugsweise mittig zwischen denselben, Laschen 206, die sich in Achsrichtung über je eine Axialbegrenzung 208 des Verbindungsteils 200 hinaus erstrecken.

Gemeinsam bildet das Federelement 90 mit den Rollorganen 42 jeweils eine Rollenanordnung 44.

Die Achse 46 des jeweiligen Rollorgans 42 soll drehfest in der Aufnahme 204 angeordnet sein. Die Achse 46 kann daher mit Vorzug in die entsprechenden Aufnahmen 204 eingepreßt sein, wo dass eine kraftschlüssige Verbindung entsteht, es ist aber ebenso denkbar, eine formschlüssige Verbindung herzustellen, wofür die Achse 204, wie in Fig. 8d gezeigt, mit einer geometrischen Kontur 210 ausgebildet ist, welche in eine entsprechende Gegenkontur 212 der Aufnahme 204 eingreift. Die Rollorgane 42 können, in bereits zur Fig. 2 gezeigter Weise, mittels einer Wälzlagerung auf der jeweiligen Achse 46 angeordnet sein. Ebenso ist aber auch denkbar, statt dessen gemäß Fig. 8e eine Gleitlagerung 250 vorzusehen, die als hülsenförmiges Element ausgebildet sein kann und mit ihrer radialen Innenseite auf die Achse 46 aufgepresst und somit gegenüber derselben drehfest ist, während das Rollorgan 42 mit seiner radialen Innenseite gleitfähig auf der radialen Außenseite der Gleitlagerung 250 angeordnet ist, mit seiner radialen Außenseite dagegen am Gleitflächenbereich 78 des Abstützbereichs 38 von Primärseite 12 oder Sekundärseite 30 abrollt, und zwar um sein Drehzentrum Z.

Aufgrund dieser geometrischen Konstellation wird das Rollorgan 42 bei einer Relativbewegung des Abstützelementes 36 gegenüber dem Abstützbereich 38 an seiner radialen Außenseite an einer ersten Stelle i1 in Fig. 8e mit einer Umfangskraft F_{U1} belastet, die eine Rollbewegung des Rollorgans 42 um die radiale Außenseite der Gleitlagerung 250 erzeugt, wobei an einer zweiten Stelle i2 zwischen der radialen Innenseite des Rollorgans 42 und der radialen Außenseite der Gleitlagerung 250 eine reibungsbehaftete Gleitbewegung entsteht. Der Reibungseinfluß dieser Gleitbewegung ist allerdings gering, da zwischen dem Außendurchmesser des Rollorgans 42 und dem Außendurchmesser der Gleitlagerung 250 ein Übersetzungsverhältnis vorliegt. Hierdurch bedingt, liegt an der zweiten Stelle i2, bezogen auf das Drehzentrum Z, die Umfangskraft F_{U2} an.

Eine Gleitlagerung 250 liegt ebenfalls vor, wenn das Rollorgan 42 unmittelbar auf der drehfesten Achse 46 angeordnet ist. Die Übersetzung ergibt sich dann aus dem Außendurchmesser des Rollorgans 42 gegenüber dem Außendurchmesser der Achse 46.

Derart vorbereitet, soll die Rollenanordnung 44 zur Bildung eines in Fig. 8a gezeigten Abstützelementes 36 in einen Abstützelementenkörper 40 gemäß Fig. 8b eingebracht werden. Hierzu wird die Rollenanordnung 44 durch eine Ausnehmung 246 an der radialen Außenseite des Abstützelementenkörpers 40 in denselben eingelegt, wobei die Aufnahmen 204 des Federelementes 90 jeweils in eine Auswölbevertiefung 214 in einem Boden 226 des Abstützelementenkörpers 40 eintauchen. Gleichzeitig werden die Laschen 206 in jeweils eine Führungsnut 216 des Abstützelementenkörpers 40 eingesetzt, und zwar bis zum Erreichen eines als Radialanschlag 218 dienenden Mittenabschnittes 217. An jeder Führungsnut 216 ist pro Umfangsrichtung je ein Umfangsanschlag 220 vorgesehen, an welchem sich die Lasche 206 und damit die Rollenanordnung 44 in Umfangsrichtung, also in Richtung der Momentenübertragung, abstützen kann. Insofern wirkt jede der Laschen 206 als Positionierung 222.

Unter Fliehkraftbelastung tauchen die Rollorgane 42, die sich am Gegen-Gleitflächenbereich 62 des Abstützbereichs 38 der Primärseite 12 oder der Sekundärseite 30 abstützen, unter Auslenkung der Endschenkel 202 des Federelementes 90 tiefer in die Auswölbevertiefung 214 ein, und lösen dadurch am Abstützelementenkörper 40 eine Bewegung nach radial außen aus, bis dessen Gleitflächenbereich 78 sich dem hier nicht dargestellten Gegen-Gleitflächenbereich 62 angenähert hat, so dass der Gleitflächenbereich 78 bei Erreichen der bereits erwähnten Grenz-Fliehkraft in Anlagekontakt und damit in Gleitreibungsabstützung am Gegen-Gleitflächenbereich 62 gekommen ist. Erst bei erneuter Unterschreitung der Grenz-Fliehkraft wird sich diese Gleitreibungsabstützung wieder lösen.

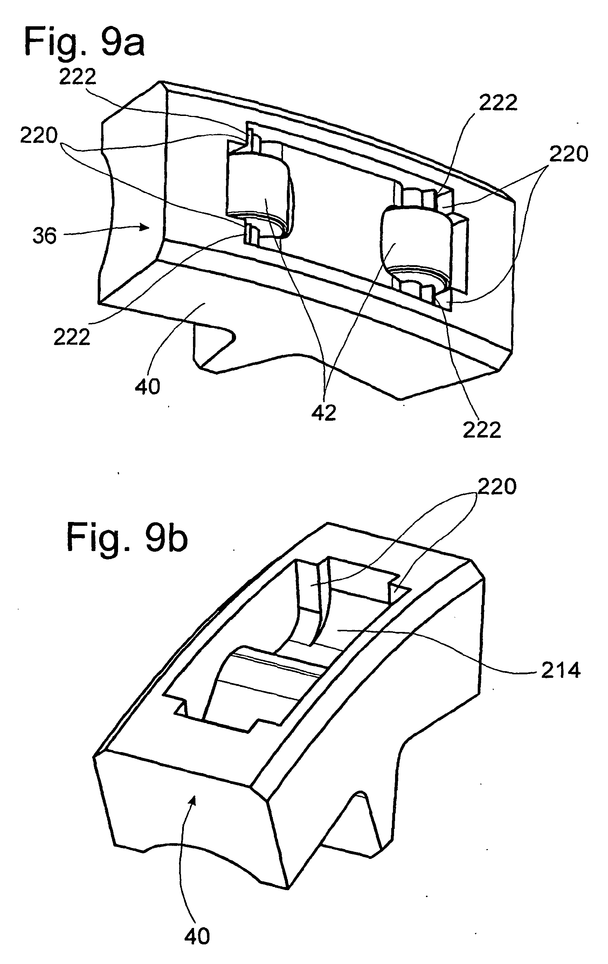

Die Ausführung des Abstützelementes 36 gemäß Fig. 9a unterscheidet sich von derjenigen der Fig. 8a durch die Positionierung der Umfangsanschläge 220 für die Rollenanordnung 44 im Abstützelementenkörper 40. Wie aus Fig. 9b ersichtlich, sind im Abstützelementenkörper 40 axial beidseits der jeweiligen Auswölbevertiefung 214 für die Rollorgane 42 Umfangsanschläge 220 vorgesehen, an welchen sich jeweils eine Aufnahme 204 für eine Achse 46 abstützt. Insofern ist das jeweilige umfangsseitige freie Ende jeder Aufnahme 204 als Positionierung 222 wirksam, welche mit dem entsprechenden Umfangsanschlag 220 zusammen wirkt.

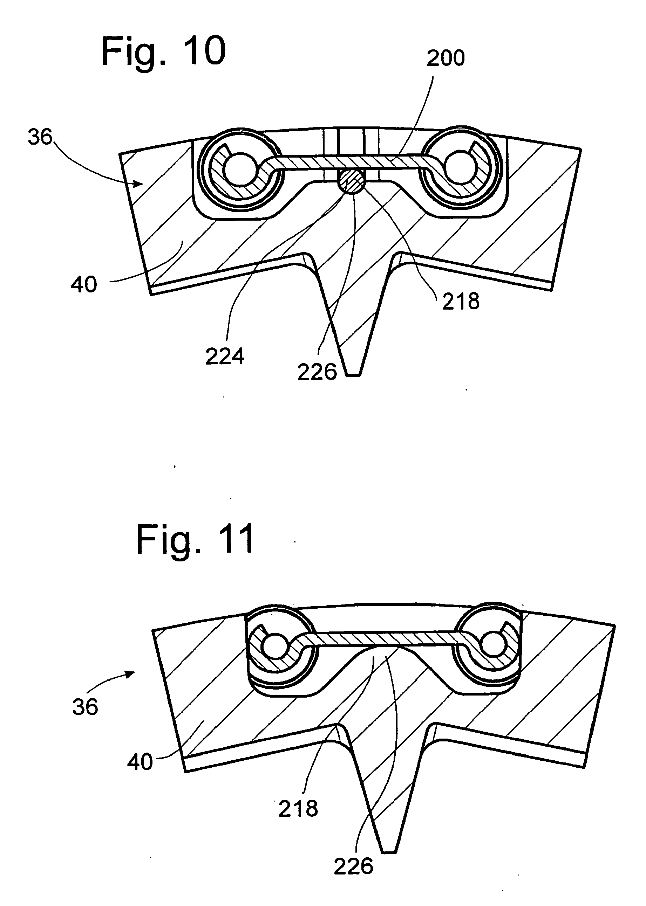

Das Abstützelement 36 entsprechend Fig. 10, 11 oder 12 ist, abweichend von der Ausführung nach Fig 8b, mit nur einem Radialanschlag 218 ausgebildet. Bei dem Abstützelement der Fig. 10 ist der Radialanschlag 218 durch einen in einer Vertiefung 225 im Boden 226 des Abstützelementenkörpers 40 im Wesentlichen mittig angeordneten und sich im Wesentlichen axial erstreckenden Bolzen 224 gebildet. Der Bolzen 224 dient als Schwenkliniem für den Verbindungsteil 200 und damit für die gesamte Rollenanordnung 44. Aufgrund dieses Bolzens 224 ist die bei Kraftabstützung zwischen Abstützelementenkörper 40 und Federelement 90 auftretende Flächenpressung kontrollierbar.

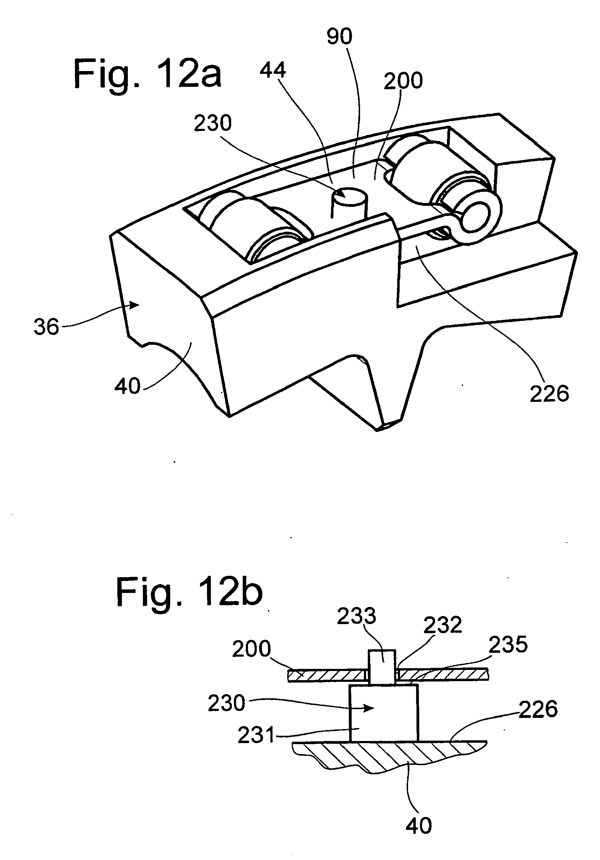

Bei Fig. 11 ist eine dem Bolzen 224 funktional entsprechende Aufwölbung 228 im Boden 226 des Abstützelementenkörpers 40 als Radialanschlag 218 wirksam.
Gemäß Fig. 12a, b ist, ausgehend vom Boden 226 des Abstützelementenkörpers 40 und sich im Wesentlichen nach radial außen erstreckend, ein Zapfen 230 vorgesehen, dessen radial innerer Teil 231 über einen größeren Durchmesser als dessen radial äußerer Teil 233 verfügt, so dass am Durchmesserübergang eine im Wesentlichen ringförmige Auflage 235 entsteht. Im Verbindungsteil 200 des Federelementes 90 und damit der Rollenanordnung 44 findet sich, sowohl in Umfangs- als auch in Radialrichtung im Wesentlichen mittig ausgebildet, eine Durchgangsöffnung 232, die bezüglich ihres Durchmessers an den Durchmesser des radial äußeren Teils 233 des Zapfens 230 angepasst ist. Die Rollenanordnung 44 kann demnach auf den radial äußeren Teil 233 des Zapfens 230 aufgeschoben und damit an den Boden 226 des Abstützelementenkörpers 40 angenähert werden, bis der Verbindungsteil 200 mit seinem die Durchgangsöffnung 232 unmittelbar umgebenden Abschnitt an der ringförmigen Auflage 235 am radial äußeren Ende des radial inneren Teils 231 des Zapfens 230 zur Anlage kommt. Dadurch wird dieser Teil 231 des Zapfens 230 zum Radialanschlag 218 für die Rollenanordnung 44. Mit seinem die Durchgangsöffnung 232 des Verbindungsteils 200 durchdringenden radial äußeren Teil 233 wirkt der Zapfen 230 gleichzeitig als Umfangsanschlag 220 für die Rollenanordnung 44, während die Durchgangsöffnung 232 als Positionierung 222 dient.

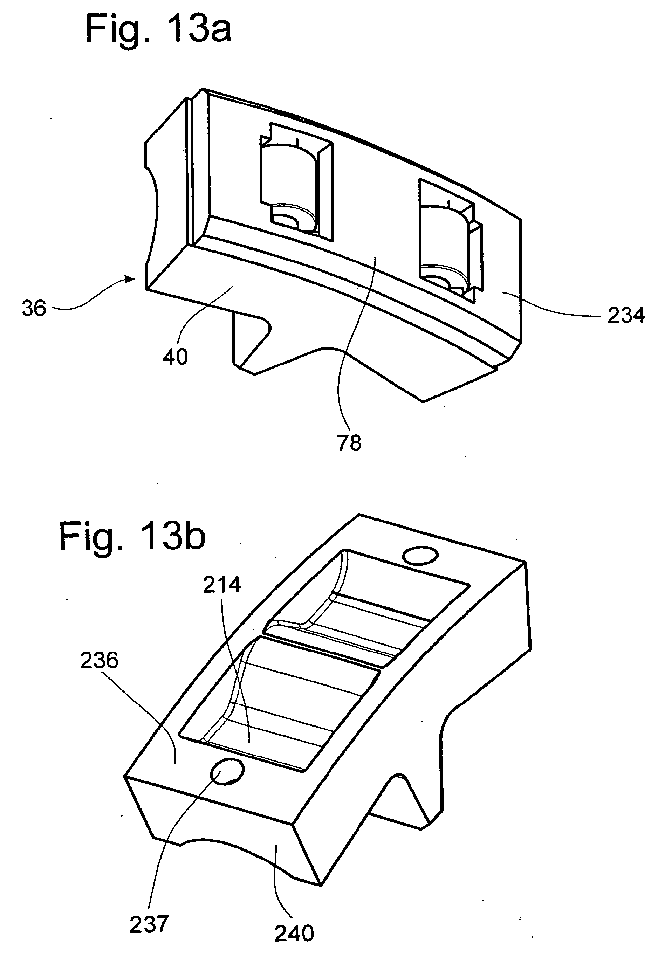

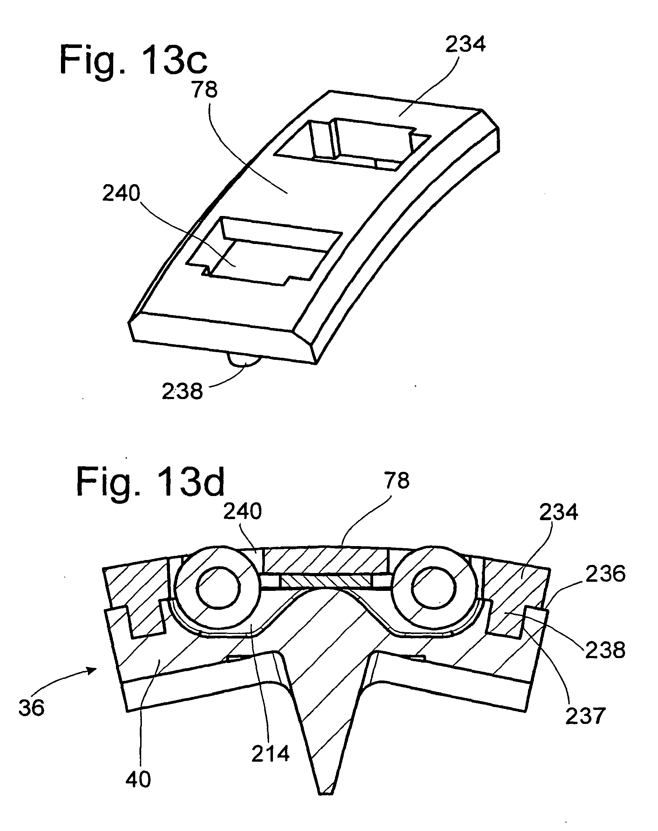

Die Ausführung des Abstützelementes 36 gemäß Fig. 13a entspricht im Wesentlichen derjenigen nach Fig. 8a, wobei als einziger Unterschied verbleibt, dass bei dem Abstützelement 36 der Fig. 13a dem Abstützelementenkörper 40 eine radial äußere Abdeckung 234 zugeordnet ist, an deren radialer Außenseite der Gleitflächenbereich 78 ausgebildet ist. Mit Vorzug kann die Abdeckung 234 aus einem Werkstoff mit besonders guten Gleiteigenschaften ausgebildet sein, oder an seinem Gleitflächenbereich 78 entsprechend bearbeitet oder beschichtet sein.

Wie Fig. 13b zeigt, sind im Abstützelementenkörper 40 an dessen der Abdeckung 234 zugewandter radialer Außenseite 236 Öffnungen 237 vorgesehen, und zwar umfangsseitig beidseits der Auswölbevertiefungen 214 für die Rollorgane 42. Zugeordnet zu den Öffnungen 237 sind an der Abdeckung 234 an deren der radialen Außenseite 236 des Abstützelementenkörpers 40 zugewandter Seite Zapfen 238 vorgesehen, die zum Einrasten in die Öffnungen 237 bestimmt sind, um die Abdeckung 234 am Abstützelementenkörper 40 zu befestigen. Mit der Abdeckung 234 ergibt sich eine zusätzliche Sicherung, um ein Lösen der Rollenanordnung 44 aus dem Abstützelementenkörper 44 wirksam zu verhindern. Für einen Durchtritt der Rollorgane 42 nach radial außen verfügt die Abdeckung 234 über den Rollorganen 42 jeweils zugeordnete Ausnehmungen 240.

Mit Vorzug ist die Abdeckung 234 in Umfangsrichtung kleiner als der Abstützelementenkörper 40 ausgebildet. Dadurch übernimmt der letztgenannte eine Anschlagfunktion in Umfangsrichtung zur Begrenzung des Einfederwegs von an dieser Stelle nicht gezeigten Dämpferelementen 24 der Dämpferelementenanordnung 26 (vgl. Fig. 1). Der Abstützelementenkörper 40 kann hierdurch aus einem stoßfesten zähen Werkstoff bestehen, während die nicht stoßbelastete Abdeckung 234 im Wesentlichen für gute Gleiteigenschaften optimiert werden kann.

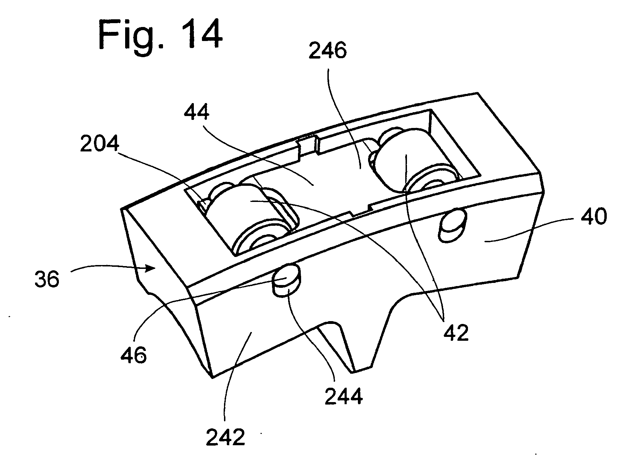

Fig. 14 zeigt ein Abstützelement 36, bei welchem der Abstützelementenkörper 40 an zumindest einer axialen Außenseite 242 Montageöffnungen 244 für die Achsen 46 der Rollorgane 42 aufweist. Bei dieser Ausführung des Abstützelementes 36 werden die Rollorgane 42 von radial außen her eingelegt, während die Achsen 46 axial von der Außenseite 242 aus eingeschoben und zur Herstellung der Rollenanordnung 44 in die Aufnahmen 204 des Federelementes 90 eingepreßt werden. Hierdurch ist die Rollenanordnung 44 auch ohne Abdeckung unverlierbar im Abstützelementenkörper 40 gehalten. Die Montageöffnungen 244 sind, zumindest mit einer Erstreckungskomponente in Radialrichtung, verlängert, um die Achsen 46 beim Einfedern der Rollorgane 42 nicht zu behindern. Selbstverständlich ist hierbei die Form der Montageöffnungen 244 an den Weg der Achsen 46 beim Einfedern der Rollorgane 42 angepasst.

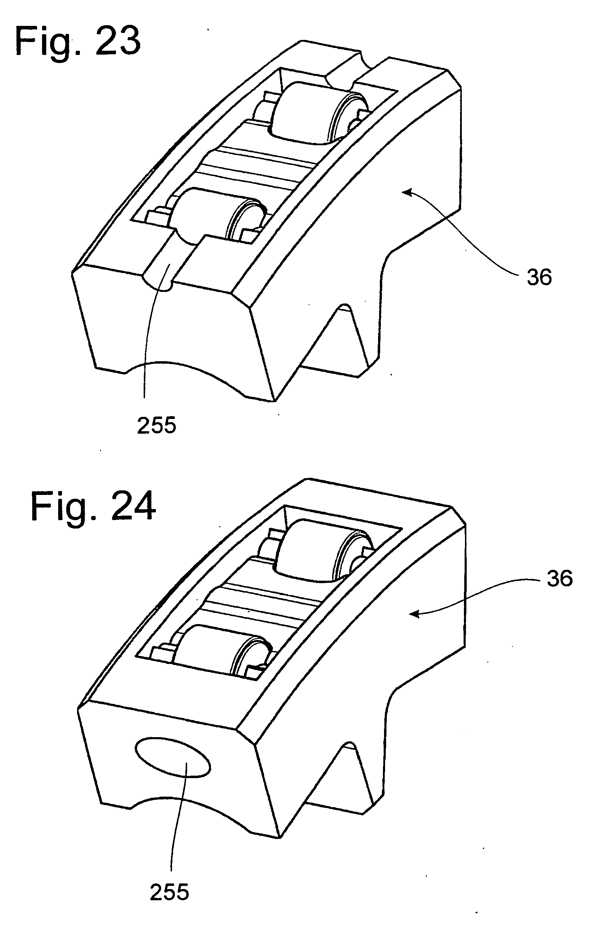

In Fig. 23 und 24 ist jeweils ein Abstützelement 36 mit Fluiddurchlässen 255 dargestellt, wobei die letztgenannten für eine Durchströmung mit viskosem Medium vorgesehen und daher im radial äußeren Erstreckungsbereich des Abstützelementes 36 angeordnet sind, also in demjenigen Erstreckungsbereich, in welchem sich fliehkraftbedingt auf jeden Fall viskoses Medium in der Primärseite 12 ansammelt. Gemäß Fig. 23 sind die Fluiddurchlässe 255 als Rinne an der radialen Außenseite des Abstützelementes 36 vorgesehen, gemäß Fig. 24 dagegen als Durchgangsöffnungen an den Umfangsseiten des Abstützelementes. In jedem Fall wirkt der jeweilige Fluiddurchlaß 255 als Fluidaustritt für die jeweils mit einem der Fluiddurchlässe 255 in Strömungsverbindung stehende Auswölbevertiefung 214 des Abstützelementes 36. Dadurch kann bei Verlagerung des Abstützelementes 36 in Umfangsrichtung eine übermäßige Ansammlung viskosen Mediums in den Auswölbevertiefungen 214 vermieden werden. Eine derartige Ansammlung würde, aufgrund gleichzeitig erfolgender Anpressung des Abstützelementes 36 nach radial außen, eine lebensdauermindernde Druckerhöhung in der Auswölbevertiefung 214 auslösen. In einem solchen Fall könnte eine Abdichtung des Abstützelementes 36 erforderlich sein, was zusätzlichen Aufwand und Kosten verursacht. Auf eine derartige Abdichtung kann allerdings bei Ausbildung der Abstützelemente 36 mit den Fluiddurchlässen 255 verzichtet werden.

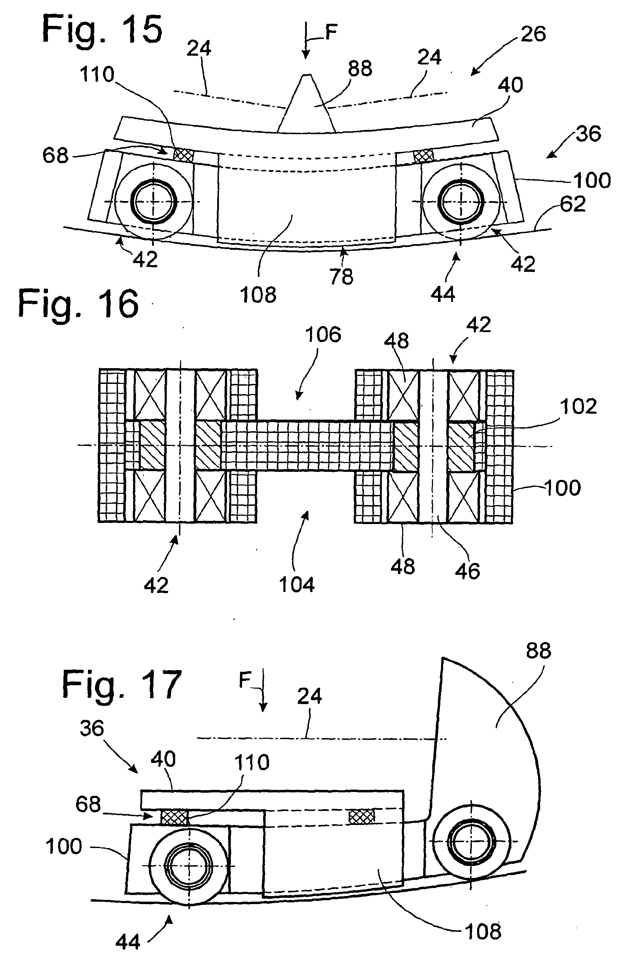

Eine alternative Ausgestaltungsform eines Abstützelements, in welches die vorangehend bereits angesprochene Elastizität der elastischen Anordnung 68 integriert ist, ist in den Figuren 15 und 16 gezeigt. Bei dieser Ausgestaltungsform sind die Abstützelemente 36 grundsätzlich in zwei Bereiche unterteilt, nämlich zum einen den beispielsweise wieder aus Kunststoff gefertigten Abstützelementenkörper 40 an dem auch die Dämpferelemente 24 der Dämpferelementenanordnung 26 abgestützt sind. Ferner ist ein Rollorganträger 100 vorgesehen, an dem nunmehr die beispielsweise zwei Rollorgane 42 der Rollenanordnung 44 eines jeweiligen Abstützelements 36 getragen sind.

Wie man in Fig. 16 erkennt, umfasst bei dieser Ausgestaltungsform jedes der Rollorgane 42 wieder eine Achse 46, die nunmehr jedoch in ihrem zentralen Bereich beispielsweise über ein aus Metallmaterial gebildetes hülsenartiges Trägerelement 102 an dem beispielsweise aus Kunststoffmaterial gefertigten Rollorganträger 100 beispielsweise nicht drehbar getragen ist. An beiden seitlichen Endbereichen trägt jede Achse 46 jeweils einen Rollbereich 48, beispielsweise wieder umfassend einen Lageraußenring, der über eine Mehrzahl von Wälzkörpern entweder direkt an der Achse 46 oder einem an der Achse 46 getragenen Lagerinnenring getragen ist. Zwischen den Endbereichen des Rollorganträgers 100, in welchen die Rollorgane 42 dieses Abstützelements 36 getragen sind, sind zwei seitliche Ausnehmungen 104, 106 gebildet. In diese Ausnehmungen 104, 106, die radial durchgehend sind, greifen seitliche Schürzenbereiche 108 des Abstützelementenkörpers 40 so ein, dass grundsätzlich der Abstützelementenkörper 40 radial bezüglich des Rollorganträgers 100 verlagerbar ist, jedoch in Umfangsrichtung eine Relativbewegung zwischen diesen beiden Teilen 140 nicht auftreten kann und im Wesentlichen auch keine Verkippbewegung des Abstützelementenkörpers 40 bezüglich des Rollorganträgers 100 auftreten kann. Diese seitlichen Schürzen 108 stellen nunmehr den Gleitflächenbereich 78 am Abstützelementenkörper 40 bereit, der dem Gegen-Gleitflächenbereich 62 radial gegenüber liegt.

Weiter erkennt man in Fig. 15, dass zwischen dem Abstützelementenkörper 40 und dem Rollorganträger 100 die elastische Anordnung 68 beispielsweise in Form zweier oder mehrerer Elastomerblöcke 110 ausgebildet ist. Es sei hier darauf hingewiesen, dass selbstverständlich hier auch andere elastische Elemente, wie Federbleche, Schraubendruckfedern o.dgl. eingesetzt werden können. Diese elastische Anordnung 68 stellt nunmehr eine Rückstellkraft bereit, die grundsätzlich der Fliehkraft F entgegengerichtet ist und dafür sorgt, dass bei unter einer bestimmten Grenz-Fliehkraft liegender Fliehkraft der Gleitflächenbereich 78 nicht an dem Gegen-Gleitflächenbereich 62 anliegt. Wird jedoch diese Grenz-Fliehkraft überschritten, so reicht die Rückstellkraft der elastischen Anordnung 68 nicht mehr aus, um den Gleitflächenbereich 78 in Abstand vom Gegen-Gleitflächenbereich 62 zu halten, so dass auch dann wieder der vorangehend bereits angesprochene Zustand erlangt wird, in dem zusätzlich zur Rollbewegung bzw. Rollabstützung auch eine unmittelbare und die Rollenanordnung 44 dann entlastende bzw. eine stärkere Belastung derselben verhindernde Gleitreibungsabstützung vorhanden ist. Hierbei ist zu bemerken, dass die zur Herstellung dieses Gleitreibungszustands wirksamen Fliehkräfte nicht nur diejenigen Kräfte sind, die durch die Eigenmasse der Abstützelemente 36 bzw. Abstützelementenkörper 40 generiert werden. Einen wesentlichen Kraftbeitrag liefert auch auch die durch die Abstützelemente 36 bewerkstelligte Radialabstützung der Dämpferelemente 24 der Dämpferelementenanordnung 26 selbst. Auch diese Kräfte müssten andernfalls vollständig im Bereich der Abstützung der Rollorgane 42 an den Abstützelementenkörpern 40 selbst aufgefangen werden.

In Fig. 17 ist ein Abstützelement 36 gezeigt, das in seinem Aufbau grundsätzlich dem in Fig. 8 erkennbaren Abstützelement entspricht. Während das Abstützelement 36 der Fig. 15 dazu ausgebildet war, eine Umfangsabstützung einzelner Dämpferelemente 24 einer Gruppe von Dämpferelementen aneinander zu realisieren, dient das in Fig. 17 gezeigte Abstützelement 36 dazu, das in Umfangsrichtung letzte Dämpferelement 24 einer derartigen Gruppe von Dämpferelementen bezüglich der Primärseite 12 und auch der Sekundärseite 30 abzustützen. Hierzu ist der Abstützvorsprung 88 mit einer Kontur ausgestaltet, die eine möglichst gleichmäßige Belastung desselben bei Beaufschlagung durch die Primärseite oder die Sekundärseite sicherstellt. Man erkennt jedoch, dass nunmehr dieser Abstützvorsprung 88 am Rollorganträger 100 vorgesehen ist, während der Abstützelementenkörper 40 nunmehr radial außerhalb des zugeordneten Dämpferelements 24 liegt und dieses somit in seinem Umfangsendbereich möglichst gleichmäßig nach radial außen hin abstützen kann.

Um den im Gleitreibungszustand allgemein auftretenden Aufrieb so gering als möglich zu halten, kann an den Schürzen 108 entweder eine Verschleißschutzschicht vorgesehen sein, oder es kann ein verschleißschützendes Element, wie z.B. ein gehärtetes Blechelement dort vorgesehen sein. Dies trifft selbstverständlich auch für die anderen Ausgestaltungsformen zu. Weiterhin kann vorgesehen sein, dass der erforderliche Radialhub des Abstützelementenkörpers 40 zur Erlangung des Gleitreibungszustands bezüglich der Rollenanordnung 44 so dimensioniert ist, dass er nur einem Teil des maximal möglichen Hubs entspricht, so dass ein gewisser Verschleiß vorgehalten werden kann.

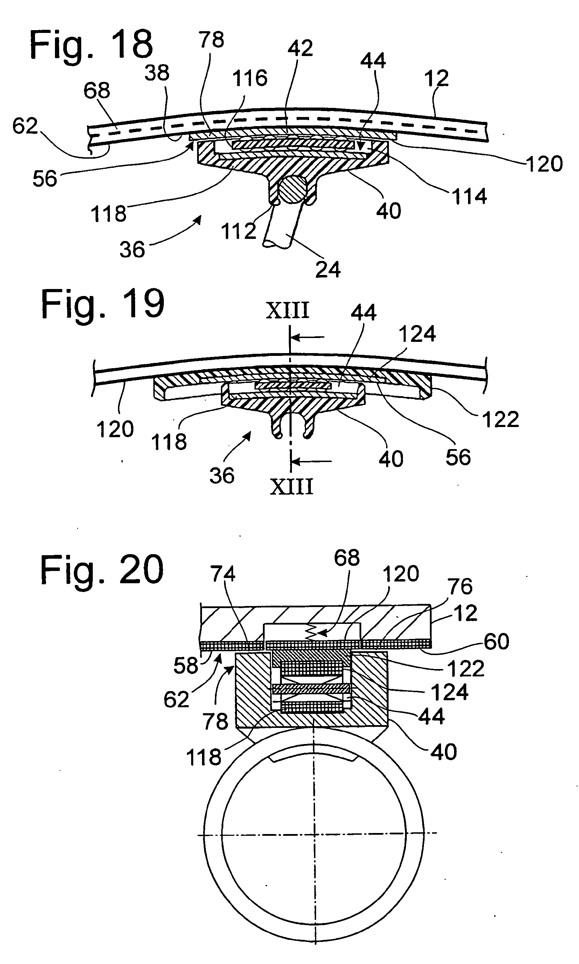

Ein weiteres Abstützelement 36 ist in Fig. 18 gezeigt. Dieses Abstützelement 36 ist dazu ausgebildet, beispielsweise bei mit längerer Umfangserstreckung ausgestalteten Dämpferelementen 24 nicht am Endbereich, sondern an einem zwischen den Endbereichen desselben liegenden Zwischenbereich festgelegt zu werden. Zu diesem Zwecke ist am Abstützelementenkörper 40 ein Klipp-Bereich 112 vorgesehen, der auf die Federwindungen einer als Dämpferelement wirksamen Schraubendruckfeder aufgeklammert werden kann.

Das Abstützelement 40 ist bei dieser Ausgestaltungsform mit einer nach radial außen offenen Einsenkung 114 ausgebildet. In dieser Einsenkung 114 liegt die Rollenanordnung 44, die hier beispielsweise einen Rollenkäfig 116 mit mehreren darin getragenen Rollorganen 42, beispielsweise Rolllagern, Walzen, Nadeln o.dgl. umfassen kann. Diese Rollenanordnung 44 ist in der Vertiefung 114 in Umfangsrichtung, also auch der Bewegungsrichtung des Abstützelements 36, in begrenztem Bewegungsbereich bewegbar und kann dabei auf einem Einlegeteil 118, beispielsweise einem Metallteil, abrollen. Auch an der nur schematisch dargestellten Primärseite 12 kann der Abstützbereich 38 einen aus einem Metallteil 120 o.dgl. gebildeten Rollflächenbereich 56 aufweisen. Dieser Rollflächenbereich kann wieder radial elastisch unter Einsatz einer nur durch Strichlinie angedeuteten elastischen Anordnung an der Primärseite 12 getragen sein.

Bei Umfangsbewegung rollt, je nach Bewegungsrichtung des Abstützelements 36, die Rollenanordnung 44 in der Vertiefung 114, bis, bei entsprechend starker Umfangsbewegung des Abstützelements 36 das Ende dieser Vertiefung 114 erreicht ist. Eine weitere Abrollbewegung der Rollenanordnung 44 ist bei dann auch noch anhaltender Umfangsbewegung des Abstützelements 36 nicht möglich. Diese weitere Umfangsbewegung des Abstützelements 36 wird dann unter Durchführung einer Gleitbewegung der Rollorgane 42 an dem Rollflächenbereich 56 erfolgen und somit eine zusätzliche Gleitreibungskomponente einführen. Dieser Zustand wird auch dann auftreten, wenn vergleichsweise geringe Drehzahlen und somit Fliehkräfte vorliegen. Die Wirkung ist dabei entsprechend einer verschleppt wirkenden Reibeinrichtung, da bei Erreichen einer bestimmten Umfangsauslenkung zwischen Primärseite 12 und Sekundärseite 30 diese zusätzliche Gleitbewegung stattfinden wird.

Unterliegt das in Fig. 18 dargestellte Abstützelement 36 einer Fliehkraft, die zu einer entsprechend starken Kompression der elastischen Anordnung 68 führt, so wird das den Rollflächenbereich 56 bereitstellende Metallteil 120, ähnlich wie vorangehend mit Bezug auf die Fig. 2 beschrieben, verstärkt radial verlagert werden, und zwar mit ansteigender Fliehkraft so lange, bis der Abstützelementenkörper 40 mit dem daran gebildeten Gleitflächenbereich 78 in Anlage am Gegen-Gleitflächenbereich 62 der Primärseite gelangen wird. Unabhängig davon, wie stark die Auslenkung des Abstützelements 36 in Umfangsrichtung ist, wird ab diesem Zustand dann wieder für die Entlastung der Rollenanordnung 44 gesorgt.

Bei der in Fig. 19 gezeigten Abwandlung dieser Ausgestaltungsvariante weist das Abstützelement 36 ferner einen Abrollschlitten 122 auf. Dieser liegt dem Abstützelementenkörper radial gegenüber und stellt mit einem Einlageteil 124 nunmehr einen Rollflächenbereich 56 für die Rollenanordnung 44 bereit. Der Abrollschlitten 122 ist an dem Metallteil 120 abgestützt, das wiederum unter Zwischenschaltung der elastischen Anordnung 68 beispielsweise bezüglich der Primärseite 12 abgestützt ist.

Bei Umfangsbewegung des Abstützelementenkörpers 40 und dabei auftretender Abrollbewegung der Rollenanordnung 44 bezüglich des Abrollschlittens 122 und bezüglich des Abstützelementenkörpers 40 bewegt sich somit der Abstützelementenkörper 40 zunächst in Umfangsrichtung bezüglich des Abrollschlittens 122, und zwar so lange, bis wieder der begrenzte Bewegungsbereich durchlaufen ist. Das Bewegungsende kann dann erlangt werden, wenn der Abstützelementenkörper 40 in Umfangsrichtung am Abrollschlitten 122 anstößt, so dass dann eine weitere Relativbewegung zwischen diesen beiden Bauteilen in dieser Bewegungsrichtung nicht möglich ist. Eine weiter anhaltende Umfangsverlagerung des Abstützelementenkörpers 40, bedingt durch eine weitere Relativdrehung zwischen der Primärseite 12 und der Sekundärseite 30 hat dann zur Folge, dass der Abrollschlitten 122 zur Umfangsbewegung mitgenommen wird und nunmehr sich gleitend über das Metallteil 120 bewegen wird. Es wird auch somit eine verschleppte Reibwirkung induziert, wobei nunmehr jedoch nicht die Rollorgane 42 der Rollenanordnung 40 gleitreibend wirksam werden, sondern der Abrollschlitten 122. Dies schützt die Rollorgane 42 vor durch die Gleitbewegung induziertem Verschleiß.

Steigt bei diesem System die Fliehkraft an, so wird das Teil 120 durch die vermittels des Abrollschlittens 122 eingeleitete Fliehkraft unter Kompression der elastischen Anordnung 68 zunehmend radial nach außen verlagert, so dass die am Abstützelementenkörper 40 vorgesehenen Flächenabschnitte 74, 76 des Gleitflächenbereichs 78 bei entsprechend starker Fliehkrafteinwirkung wieder in Anlegekontakt mit den Flächenabschnitten 58, 60 des Gegen-Gleitflächenabschnitts 62 treten können.

Es ist selbstverständlich, dass auch die zwischen einzelnen Dämpferelementen 24 bzw. am Ende der Gruppen derselben wirkenden Abstützelemente 36 so aufgebaut sein können, wie vorangehend mit Bezug auf die Figuren 18 bis 20 beschrieben.

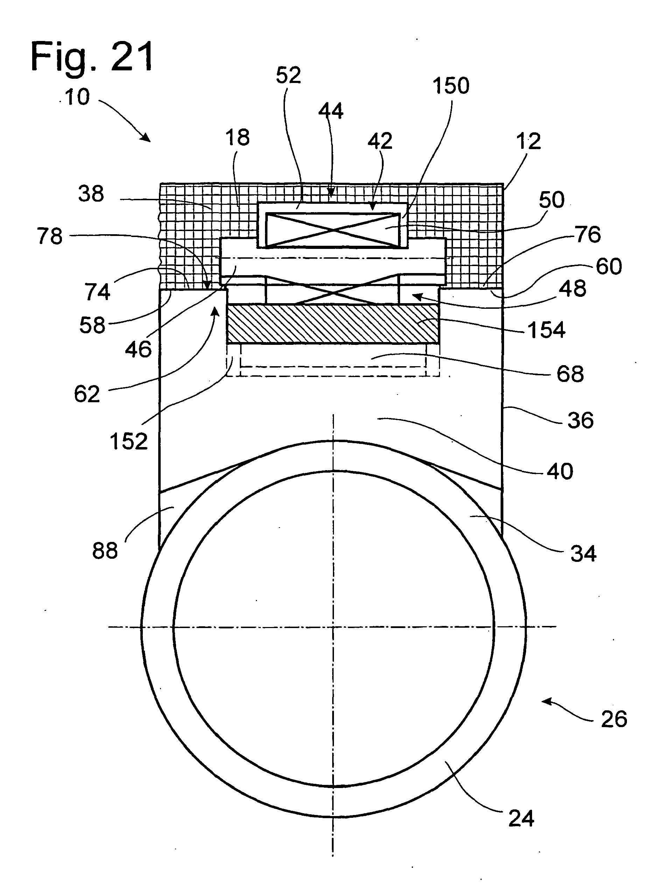

In Fig. 21 ist eine Ausgestaltungsvariante gezeigt, bei welcher die Rollenanordnung 44 bzw. die verschiedenen Rollorgane 42 derselben nicht an den Abstützelementen 36, sondern am Abstützbereich 38 der Primärseite 12 vorgesehen sind. Hierzu sind diese Rollorgane 42 mit ihren Achsen 46 beispielsweise an dem sich im Wesentlichen axial erstreckenden Abschnitt 18 des in Fig. 1 erkennbaren Deckscheibenelements 16 jeweils um eine zur Drehachse A im Wesentlichen parallele Drehachse getragen. Die Rollorgane 42 stehen mit ihrem Rollbereich 48 dabei nach radial innen über eine die oder jeweils ein Rollorgan aufnehmende Aussparung 150 hervor.

An den Abstützelementen 36 sind in einer hierfür jeweils vorgesehenen Aussparung 152 dann beispielsweise aus Blech gebildete Rollbahnelemente 154 vorgesehen, die bezüglich der jeweiligen Abstützelementenkörper 40 über die elastische Anordnung 68 einfederbar getragen sind. Beidseits der Aussparung 152 sind an dem Abstützelementenköper 40 die Abschnitte 74, 76 des Gleitflächenbereichs 78 vorgesehen, während beidseits der Aussparung 150 die Abschnitte 58, 60 des Gegen-Gleitflächenbereichs 62 vorgesehen sind.

Der gegenseitige Umfangsabstand der nunmehr am Abstützbereich 38 vorgesehenen Rollorgane 42 ist derart, dass die einzelnen Abstützelemente 36 sich bei ihrer Umfangsbewegung stabil und ohne der Gefahr einer Verkippung nach radial außen abstützen können. Vorzugsweise ist die Anordnung so, dass zumindest immer zwei derartige Rollelemente 42 eine Abstützung für die Abstützelemente 36 vorsehen können.

Werden die Abstützelemente 36 bzw. die daran sich abstützenden Dämpferelemente 24 durch Fliehkraft beaufschlagt, so wird die elastische Anordnung 68 komprimiert, wodurch die Elemente 154 tiefer in die Aussparung 152 eintauchen. Dabei nähern sich die Abschnitte 74, 76 den gegenüber liegenden Abschnitten 58, 60 an, bis letztendlich wiederum bei Erreichen einer bestimmten Drehzahl bzw. Fliehkraft eine zusätzliche Gleitabstützung erzeugt wird.

Auch hier sei darauf hingewiesen, dass die elastische Anordnung 68 in verschiedenster Weise ausgestaltet sein kann und beispielsweise ein Wellfederelement, einen Elastomerblock, Schraubendruckfedern o.dgl. umfassen kann.

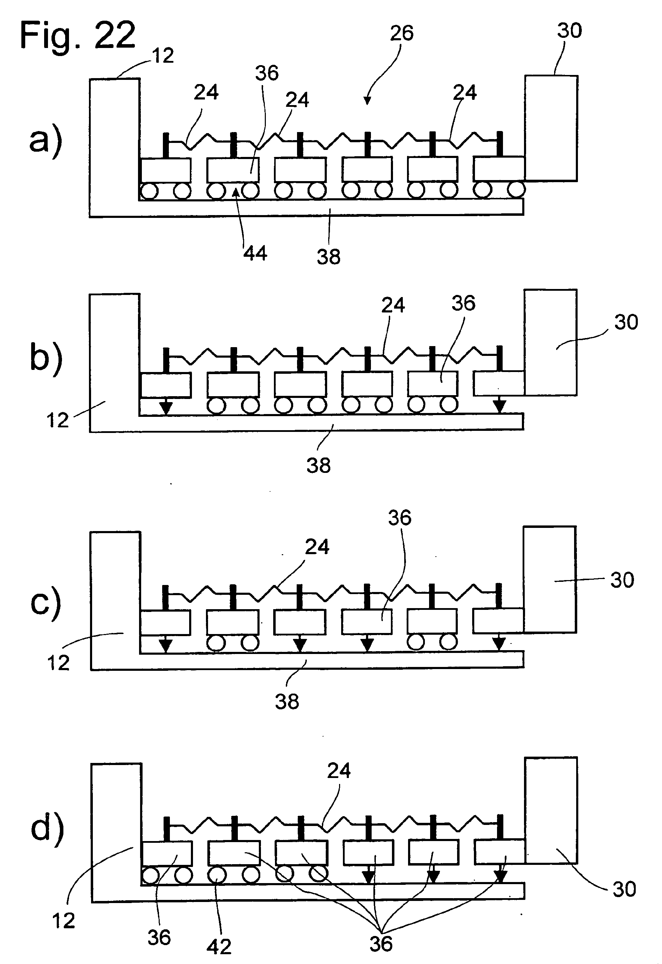

In Fig. 22 sind in den Diagrammen a) bis d) verschiedene Varianten gezeigt, die hinsichtlich der Ausgestaltung der Dämpferelementenanordnung 26 bzw. der dieser zugeordneten Abstützelemente 36 sich unterscheiden. Was die Ausbildung der Rollorgane 42 an den einzelnen Rollenanordnungen 44 betrifft, so können diese sowohl in Wälzlagerausführung als auch in Gleitlagerausführung gestaltet sein.

In Diagramm a) ist eine Variante gezeigt, wobei welcher eine zwischen der Primärseite 12 und der Sekundärseite 30 komprimierbare Gruppe von fünf Dämpferelementen bzw. Dämpferfedern 24 mit sechs Abstützelementen 36 zusammenwirkt, die allesamt über eine Rollenanordnung 44 und das vorangehend mit Bezug auf verschiedenste Ausgestaltungsformen detailliert beschriebene Schaltverhalten verfügen. Selbstverständlich ist auch hier der in Fig. 14 dargestellte Fall angesprochen, in welchem die Rollenanordnung 44 am Abstützbereich 38 vorgesehen ist.

Im Diagramm a) erfolgt die Abstützung sowohl bezüglich der Primärseite 12 bzw. der Sekundärseite 30 als auch bezüglich in Umfangsrichtung folgender Dämpferelemente 24 über mit derartigem Roll- bzw. Roll/Gleitverhalten ausgestaltete Abstützelemente ab. Im Diagramm b) sind diejenigen Abstützelemente, die im Kompressionsfall die Abstützung bezüglich der Primärseite 12 bzw. Sekundärseite 30 realisieren nicht über Rollenanordnungen abgestützt, sondern sind beispielsweise in herkömmlicher Art und Weise nur gleitend bezüglich des Abstützbereichs 38 abgestützt. Dies führt zu einer definierten permanent vorhandenen, selbstverständlich auch fliehkraftabhängig sich ändernden Gleitreibungsdämpfung bei Relativbewegung zwischen Primärseite 12 und Sekundärseite 30. Da die vier inneren Abstützelemente 36 jedoch das Rollverhalten aufweisen, werden alle Dämpferelemente 24 in gleicher Art und Weise belastet bzw. bei gleicher Ausgestaltung derselben gleich komprimiert werden.

Bei dem in dem Diagramm c) gezeigten Fall sind zusätzlich auch die beiden mittig positionierten Abstützelemente 36 nur gleitend bezüglich des Abstützbereichs 38 abgestützt, so dass bei Umfangsbewegung zwischen Primärseite 12 und Sekundärseite 30 zunächst verstärkt die beiden jeweils in Umfangsenden der Gruppe von Dämpferelementen liegenden Dämpferelemente 24 komprimiert werden und erst dann, wenn eine das Reibmoment der beiden mittig positionierten Abstützelemente 36 überwindende Umfangskraft aufgebaut ist, wird auch das mittig positionierte Dämpferelement 24 komprimiert werden.

In dem in Fig. 22d) gezeigten Falle, ist die Anordnung derart, dass jeweils drei unmittelbar benachbarte Abstützelemente 36 mit Roll- bzw. Roll/Gleit-Charakteristik ausgestaltet sind, während die anderen drei Abstützelemente 36 nur eine durch einen spitzen Pfeil jeweils indizierte Gleitcharakteristik aufweisen. Bei Kompression werden also zunächst primär diejenigen Dämpferelemente 24 belastet bzw. komprimiert werden, die mit Abstützelementen mit Rollcharakteristik zusammenwirken, während im Bereich der anderen Dämpferelemente 24 zunächst keine oder eine verminderte Kompression auftreten wird.

Durch das Miteinführen von Abstützelementen, die permanent gleitreibend abgestützt sind, kann also eine permanent wirkende Dämpfungsreibungskraft bereitgestellt werden, die insbesondere bei Auftreten von Lastwechselzuständen aber auch beim Durchlaufen der Resonanz eines Torsionsschwingungsdämpfers vorteilhafte Effekte hat. Es ist selbstverständlich, dass in Abstimmung zum Vorsehen verschieden ausgestalteter Abstützelemente mit bzw. ohne Rollcharakteristik auch Dämpferelemente verschiedener Federungscharakteristik ausgewählt werden können, d.h. mit verschiedener Federsteifigkeit.

## Patentansprüche

1. Torsionsschwingungsdämpfer, umfassend eine Primärseite (12) und eine gegen die Wirkung einer Dämpferelementenanordnung (26) bezüglich der Primärseite (12) um eine Drehachse (A) drehbare Sekundärseite (30), wobei der Dämpferelementenanordnung (26) zur Abstützung nach radial außen bezüglich der Primärseite (12) oder/und der Sekundärseite (30) wenigstens ein Abstützelement (36) zugeordnet ist, das an der Primärseite (12) oder/und der Sekundärseite (30) über eine Rollenanordnung (44) abgestützt ist, **dadurch gekennzeichnet, dass** das wenigstens eine Abstützelement (36) einen Gleitflächenbereich (78) aufweist, der fliehkraftabhängig in und außer Kontakt mit einem Gegen-Gleitflächenbereich (62) an der Primärseite (12) oder/und der Sekundärseite (30) bringbar ist.

2. Torsionsschwingungsdämpfer nach Anspruch 1,
**dadurch gekennzeichnet, dass** an der Primärseite (12) oder/und der Sekundärseite (30) ein in Umfangsrichtung um die Drehachse (A) sich erstreckender Abstützbereich (38) vorgesehen ist, entlang welchem das wenigstens eine Abstützelement (36) bewegbar ist, wobei der Abstützbereich (38) einen Rollflächenbereich (56) und den Gegen-Gleitflächenbereich (62) bereitstellt und der Rollflächenbereich (56) fliehkraftabhängig bezüglich des Gegen-Gleitflächenbereichs (62) verlagerbar ist.

3. Torsionsschwingungsdämpfer nach Anspruch 2,
**dadurch gekennzeichnet, dass** der Rollflächenbereich (56) wenigstens ein Rollflächenelement (64) umfasst, das an einer Tragestruktur (18) gegen die Rückstellkraft einer elastischen Anordnung (68) im Wesentlichen radial verlagerbar getragen ist.

4. Torsionsschwingungsdämpfer nach Anspruch 3,
**dadurch gekennzeichnet, dass** die elastische Anordnung (68) eine Rückstellkraft bereitstellt, die einer auf das wenigstens eine Abstützelement (36) einwirkenden Fliehkraft im Wesentlichen entgegengerichtet ist.

5. Torsionsschwingungsdämpfer nach Anspruch 3 oder 4,
**dadurch gekennzeichnet, dass** die durch die elastische Anordnung (68) bereitgestellte Rückstellkraft bis zum Erreichen einer auf das wenigstens eine Abstützelement (36) einwirkenden Grenz-Fliehkraft oder/und einer Grenz-Drehzahl ausreicht, um den Gleitflächenbereich (78) außer Anlagekontakt mit dem Gegen-Gleitflächenbereich (62) zu halten.

6. Torsionsschwingungsdämpfer nach einem der Ansprüche 2 bis 5,
**dadurch gekennzeichnet, dass** der Gegen-Gleitflächenbereich (62) in axialer Richtung beidseits des Rollflächenbereichs (56) jeweils einen Flächenabschnitt (58, 60) aufweist.

7. Torsionsschwingungsdämpfer nach Anspruch 3 und Anspruch 6,
**dadurch gekennzeichnet, dass** zwischen den Flächenabschnitten (58, 60) des Gegen-Gleitflächenbereichs (62) eine das wenigstens eine Rollflächenelement (56) und die elastische Anordnung (68) aufnehmende Aussparung (66) vorgesehen ist.

8. Torsionsschwingungsdämpfer nach einem der Ansprüche 2 bis 7,
**dadurch gekennzeichnet, dass** die Rollenanordnung (44) eine Mehrzahl von Rollorganen (42) umfasst, die bei Umfangsbewegung des wenigstens einen Abstützelements (36) in begrenztem Bewegungsbereich bezüglich eines Abstützelementenkörpers (40) des wenigstens einen Abstützelements (36) in der Umfangsbewegungsrichtung desselben bewegbar sind und bei Erreichen eines Endes des Bewegungsbereichs gegen weitere Rollbewegung blockiert sind.

9. Torsionsschwingungsdämpfer nach Anspruch 8,
**dadurch gekennzeichnet, dass** die Rollenanordnung (44) bezüglich des Abstützbereichs (38) über einen Abrollschlitten (122) abgestützt ist und dass bei Erreichen des Endes des Bewegungsbereichs und anhaltender Umfangsbewegung des wenigstens einen Abstützelements (36) dieses den zugeordneten Abrollschlitten (122) zur Durchführung einer Gleitbewegung entlang des Abstützbereichs (38) mitnimmt.

10. Torsionsschwingungsdämpfer nach Anspruch 1,
**dadurch gekennzeichnet, dass** die Rollenanordnung (44) wenigstens ein an einem Abstützelementenkörper (40) über eine elastische Anordnung (68) getragenes Rollorgan (42) umfasst, mit welchem das wenigstens eine Abstützelement (36) entlang eines um die Drehachse (A) sich erstreckenden Abstützbereichs (38) an der Primärseite (12) oder/und der Sekundärseite (30) bewegbar ist, wobei die elastische Anordnung (68) eine Rückstellkraft bereitstellt, welche den Abstützelementenkörper (40) mit dem daran vorgesehenen Gleitflächenbereich (78) gegen Fliehkrafteinwirkung außer Anlagekontakt mit dem den Gegen-Gleitflächenbereich (62) bereitstellenden Abstützbereich (38) hält.

11. Torsionsschwingungsdämpfer nach Anspruch 10,
**dadurch gekennzeichnet, dass** das wenigstens eine Rollorgan (42) an einem Rollorganträger (100) getragen ist und dass der Rollorganträger (100) über die elastische Anordnung (68) den Abstützelementenkörper (40) trägt.

12. Torsionsschwingungsdämpfer nach Anspruch 10 oder 11,
**dadurch gekennzeichnet, dass** die durch die elastische Anordnung (68) bereitgestellte Rückstellkraft ausreicht, um bis zum Erreichen einer auf den Abstützelementenkörper (40) einwirkenden Grenz-Fliehkraft oder/und einer Grenz-Drehzahl den Gleitflächenbereich (78) außer Anlagekontakt mit dem Gegen-Gleitflächenbereich (62) zu halten.

13. Torsionsschwingungsdämpfer nach Anspruch 10 oder 12,
**dadurch gekennzeichnet, dass** die elastische Anordnung (68) als Federelement (90) ausgebildet ist, das über eine Mehrzahl von Aufnahmen (204) für je eine Achse (46) eines Rollorgans (42) verfügt, wobei zumindest ein Teil dieser Aufnahmen (204) die zugeordnete Achse (42) drehfest aufnimmt.

14. Torsionsschwingungsdämpfer nach Anspruch 13,
**dadurch gekennzeichnet, dass** die elastische Anordnung (68) einen die Aufnahmen (204) miteinander koppelnden Verbindungsteil (200) aufweist, der am Abstützelementenkörper (40) positioniert ist.

15. Torsionsschwingungsdämpfer nach Anspruch 14,
**dadurch gekennzeichnet, dass** der Verbindungsteil (200) in Umfangsrichtung zwischen je zwei Aufnahmen (204) an einem dem Abstützbereich zugewandten Radialanschlag (218) des Abstützelementenkörpers (40) positioniert ist.

16. Torsionsschwingungsdämpfer nach Anspruch 14 oder 15,
**dadurch gekennzeichnet, dass** dem Verbindungselement (200) zur Sicherung zumindest gegen Bewegungen in Umfangsrichtung gegenüber dem Abstützelementenkörper (40) wenigstens eine am Federelement (90) und damit an der Rollenanordnung (44) vorgesehene Positionierung (222) zugeordnet ist, die mit einem entsprechenden Umfangsanschlag (220) des Abstützelementenkörpers (40) in Wirkverbindung bringbar ist.

17. Torsionsschwingungsdämpfer nach Anspruch 16,
**dadurch gekennzeichnet, dass** die Positionierung (222) am umfangsseitigen Ende der jeweiligen Aufnahme (204) einer Achse (46) vorgesehen ist, und dieser Positionierung (222) jeweils ein am Abstützelementenkörper (40) ausgebildeter, in Umfangsrichtung benachbarter Umfangsanschlag (220) zugeordnet ist.

18. Torsionsschwingungsdämpfer nach einem der Ansprüche 13 bis 17,
**dadurch gekennzeichnet, dass** die drehfeste Anordnung der Achse (46) des jeweiligen Rollorgans (42) durch einen form- oder kraftschlüssigen Eingriff dieser Achse (46) in die entsprechende Aufnahme (204) erfolgt.

19. Torsionsschwingungsdämpfer nach einem der Ansprüche 10 bis 18,
**dadurch gekennzeichnet, dass** dem Abstützelementenkörper (40) eine die Sicherung der Rollenanordnung (44) im Abstützelementenkörper (40) unterstützende Abdeckung (234) zugeordnet ist.

20. Torsionsschwingungsdämpfer nach Anspruch 19,
**dadurch gekennzeichnet, dass** die Abdeckung (234) in Umfangsrichtung kleiner als der Abstützelementenkörper (40) ausgebildet ist.

21. Torsionsschwingungsdämpfer nach Anspruch 19 oder 20,
**dadurch gekennzeichnet, dass** die Abdeckung (234) zumindest an ihrer dem Gegen-Gleitflächenbereich (62) des Abstützbereichs (38) zugewandter Seite reibungsoptimiert ausgebildet ist.

22. Torsionsschwingungsdämpfer nach einem der Ansprüche 10 bis 21,
**dadurch gekennzeichnet, dass** das Abstützelement (36) an seiner dem Abstützbereich (38) zugewandten Seite eine Ausnehmung (246) zur radialen Einbringung der Rollenanordnung (44) aufweist.

23. Torsionsschwingungsdämpfer nach einem der Ansprüche 10 bis 21,
**dadurch gekennzeichnet, dass** das Abstützelement (36) an zumindest einer axialen Außenseite (242) über Montageöffnungen (244) zum Durchgang je einer Achse (46) der Rollenanordnung (44) verfügt, und zudem an seiner dem Abstützbereich (38) zugewandten Seite eine Ausnehmung (246) zur radialen Einbringung von Rollorganen (42) aufweist.

24. Torsionsschwingungsdämpfer nach einem der Ansprüche 1 bis 23,
**dadurch gekennzeichnet, dass** die Rollenanordnung (44) über Rollorgane (42) verfügt, die jeweils mittels einer Gleitlagerung (250) auf einer zugeordneten, drehfest in einem Abstützelementenkörper (40) aufgenommenen Achse (46) angeordnet sind.

25. Torsionsschwingungsdämpfer nach Anspruch 1,
**dadurch gekennzeichnet, dass** an der Primärseite (12) oder/und der Sekundärseite (30) ein in Umfangsrichtung um die Drehachse (A) herum sich erstreckender Abstützbereich (38) mit der eine Mehrzahl von Rollorganen (42) aufweisenden Rollenanordnung (44) vorgesehen ist, wobei das wenigstens eine Abstützelement (36) bei Relativdrehung zwischen Primärseite (12) und Sekundärseite (30) in Umfangsrichtung auf den Rollorganen (42) bewegbar ist.

26. Torsionsschwingungsdämpfer nach Anspruch 25,
**dadurch gekennzeichnet, dass** das wenigstens eine Abstützelement (36) einen Rollflächenbereich (154) und den Gleitflächenbereich (78) aufweist, der über eine elastische Anordnung (68) bezüglich des Rollflächenbereichs (154) getragen ist, wobei die elastische Anordnung (68) eine einer Fliehkrafteinwirkung auf den Gleitflächenbereich (78) entgegenwirkende Rückstellkraft bereitstellt.

27. Torsionsschwingungsdämpfer nach Anspruch 26,
**dadurch gekennzeichnet, dass** die durch die elastische Anordnung (68) bereitgestellte Rückstellkraft bis zum Erreichen einer auf den Gleitflä chenbereich (78) einwirkenden Grenz-Fliehkraft oder/und einer Grenz-Drehzahl ausreicht, um den Gleitflächenbereich (78) des wenigstens einen Abstützelements (36) außer Anlagekontakt mit dem an dem Abstützbereich . (38) vorgesehenen Gegen-Gleitflächenbereich (62) zu halten.

28. Torsionsschwingungsdämpfer nach einem der Ansprüche 1 bis 27,
**dadurch gekennzeichnet, dass** eine Reibeinrichtung (80) vorgesehen ist, welche wenigstens ab Erreichen eines Grenz-Relativdrehwinkels zwischen Primärseite (12) und Sekundärseite (30) eine einer weiteren Relativdrehung entgegenwirkende Reibkraft erzeugt.

29. Torsionsschwingungsdämpfer nach einem der Ansprüche 1 bis 28,
**dadurch gekennzeichnet, dass** zumindest ein Teil der Abstützelemente (36) mit Fluiddurchlässen (255) ausgebildet sind, von denen jede in Strömungsverbindung mit einer zugeordneten Auswölbevertiefung (214) des Abstützelementes (36) steht .

30. Torsionsschwingungsdämpfer nach Anspruch 29,
**dadurch gekennzeichnet, dass** die Fluiddurchlässe (255) jeweils im radialen Außenbereich der Abstützelemente (36) vorgesehen sind.

31. Torsionsschwingungsdämpfer nach Anspruch 29 oder 30,
**dadurch gekennzeichnet, dass** die Fluiddurchlässe (255) entweder als Rinne an der radialen Außenseite des Abstützelementes 36 oder als Durchgangsöffnungen an den Umfangsseiten des Abstützelementes vorgesehen sind.

## Claims

1. Torsional vibration damper, comprising a primary side (12) and a secondary side (30) which can be rotated with respect to the primary side (12) about a rotational axis (A) counter to the action of a damper-element arrangement (26), the damper-element arrangement (26) being assigned at least one supporting element (36) for support radially outwards with respect to the primary side (12) and/or the secondary side (30), which supporting element (36) is supported via a roller arrangement (44) on the primary side (12) and/or the secondary side (30), **characterized in that** the at least one supporting element (36) has a sliding-face region (78) which can be brought into and out of contact with a corresponding sliding-face region (62) on the primary side (12) and/or the secondary side (30) as a function of the centrifugal force.

2. Torsional vibration damper according to Claim 1, **characterized in that**, on the primary side (12) and/or the secondary side (30), a supporting region (38) which extends in the circumferential direction about the rotational axis (A) is provided, along which region the at least one supporting element (36) can be moved, the supporting region (38) providing a rolling-face region (56) and the corresponding sliding-face region (62), and it being possible for the rolling-face region (56) to be displaced with regard to the corresponding sliding-face region (62) as a function of the centrifugal force.

3. Torsional vibration damper according to Claim 2, **characterized in that** the rolling-face region (56) comprises at least one rolling-face element (64) which is carried on a carrier structure (18) such that it can be displaced substantially radially counter to the restoring force of an elastic arrangement (68).

4. Torsional vibration damper according to Claim 3, **characterized in that** the elastic arrangement (68) provides a restoring force which is oriented substantially counter to a centrifugal force which acts on the at least one supporting element (36).

5. Torsional vibration damper according to Claim 3 or 4, **characterized in that** the restoring force which is provided by the elastic arrangement (68) is sufficient to hold the sliding-face region (78) out of bearing contact with the corresponding sliding-face region (62) until a limiting centrifugal force which acts on the at least one supporting element (36) and/or a limiting rotational speed has/have been reached.

6. Torsional vibration damper according to one of Claims 2 to 5, **characterized in that** the corresponding sliding-face region (62) has in each case one face section (58, 60) in the axial direction on both sides of the rolling-face region (56).

7. Torsional vibration damper according to Claim 3 and Claim 6, **characterized in that** a cut-out (66) which accommodates the at least one rolling-face element (64) and the elastic arrangement (68) is provided between the face sections (58, 60) of the corresponding sliding-face region (62).

8. Torsional vibration damper according to one of Claims 2 to 7, **characterized in that** the roller arrangement (44) comprises a plurality of rolling elements (42) which, in the event of a circumferential movement of the at least one supporting element (36) in a limited movement region with regard to a supporting-element body (40) of the at least one supporting element (36), can move in the circumferential movement direction of the said supporting element (36) and are blocked against further rolling movement when an end of the movement region has been reached.

9. Torsional vibration damper according to Claim 8, **characterized in that**, with regard to the supporting region (38), the roller arrangement (44) is supported via a rolling carriage (122), and **in that**, when the end of the movement region has been reached and in the event of a continuing circumferential movement of the at least one supporting element (36), the latter drives the associated rolling carriage (122) in order to carry out a sliding movement along the supporting region (38).

10. Torsional vibration damper according to Claim 1, **characterized in that** the roller arrangement (44) comprises at least one rolling element (42) which is carried on a supporting-element body (40) via an elastic arrangement (68) and with which the at least one supporting element (36) can be moved along a supporting region (38) which extends about the rotational axis (A) on the primary side (12) and/or the secondary side (30), the elastic arrangement (68) providing a restoring force which keeps the supporting-body element (40) with the sliding-face region (78) provided thereon out of bearing contact with the supporting region (38) which provides the corresponding sliding-face region (62), counter to the action of centrifugal force.

11. Torsional vibration damper according to Claim 10, **characterized in that** the at least one rolling element (42) is carried on a rolling-element carrier (100), and **in that** the rolling-element carrier (100) carries the supporting-element body (40) via the elastic arrangement (68).

12. Torsional vibration damper according to Claim 10 or 11, **characterized in that** the restoring force which is provided by the elastic arrangement (68) is sufficient to hold the sliding-face region (78) out of bearing contact with the corresponding sliding-face region (62) until a limiting centrifugal force which acts on the supporting-element body (40) and/or a limiting rotational speed have/has been reached.

13. Torsional vibration damper according to Claim 10 or 12, **characterized in that** the elastic arrangement (68) is configured as a spring element (90) which has a plurality of receptacles (204) for each axle (46) of a rolling element (42), at least part of the said receptacles (204) accommodating the associated axle (46) in a rotationally fixed manner.

14. Torsional vibration damper according to Claim 13, **characterized in that** the elastic arrangement (68) has a connecting part (200) which couples the receptacles (204) to one another and is positioned on the supporting-element body (40).

15. Torsional vibration damper according to Claim 14, **characterized in that** the connecting part (200) is positioned in the circumferential direction between in each case two receptacles (204) on a radial stop (218) of the supporting-element body (40), which radial stop (218) faces the supporting region.

16. Torsional vibration damper according to Claim 14 or 15, **characterized in that**, in order to secure it at least against movements in the circumferential direction with respect to the supporting-element body (40), the connecting element (200) is assigned at least one positioning means (222) which is provided on the spring element (90) and therefore on the roller arrangement (44) and can be brought into operative connection with a corresponding circumferential stop (220) of the supporting-element body (40).

17. Torsional vibration damper according to Claim 16, **characterized in that** the positioning means (222) is provided on the circumferential-side end of the respective receptacle (204) of an axle (46), and the said positioning means (222) is assigned in each case one circumferential stop (220) which is formed on the supporting-element body (40) and is adjacent in the circumferential direction.

18. Torsional vibration damper according to one of Claims 13 to 17, **characterized in that** the axle (46) of the respective rolling element (42) is arranged fixedly in terms of rotation by a form-fitting or force-transmitting engagement of the said axle (46) in the corresponding receptacle (204).

19. Torsional vibration damper according to one of Claims 10 to 18, **characterized in that** the supporting-element body (40) is assigned a covering (234) which assists the securing of the roller arrangement (44) in the supporting-element body (40).

20. Torsional vibration damper according to Claim 19, **characterized in that** the covering (234) is of smaller configuration in the circumferential direction than the supporting-element body (40).

21. Torsional vibration damper according to Claim 19 or 20, **characterized in that** the covering (234) is configured in a frictionally optimized manner, at least on its side which faces the corresponding sliding-face region (62) of the supporting region (38).

22. Torsional vibration damper according to one of Claims 10 to 21, **characterized in that** the supporting element (36) has a recess (246) for the radial introduction of the roller arrangement (44) on its side which faces the supporting region (38).

23. Torsional vibration damper according to one of Claims 10 to 21, **characterized in that**, on at least one axial outer side (242), the supporting element (36) has mounting openings (244) for the passage of in each case one axle (46) of the roller arrangement (44), and additionally has a recess (246) for the radial introduction of roller elements (42) on its side which faces the supporting region (38).

24. Torsional vibration damper according to one of Claims 1 to 23, **characterized in that** the roller arrangement (44) has roller elements (42) which are arranged in each case by means of a sliding bearing (250) on an associated axle (46) which is accommodated in a supporting-element body (40).

25. Torsional vibration damper according to Claim 1, **characterized in that**, on the primary side (12) and/or the secondary side (30), a supporting region (38) is provided which extends in the circumferential direction about the rotational axis (A) and has the roller arrangement (44) which has a plurality of roller elements (42), it being possible for the at least one supporting element (36) to be moved in the circumferential direction on the roller elements (42) in the event of a relative movement between the primary side (12) and the secondary side (30).

26. Torsional vibration damper according to Claim 25, **characterized in that** the at least one supporting element (36) has a rolling-face region (154) and the sliding-face region (78) which is supported with respect to the rolling-face region (154) via an elastic arrangement (68), the elastic arrangement (68) providing a restoring force which counteracts the action of a centrifugal force on the sliding-face region (78).

27. Torsional vibration damper according to Claim 26, **characterized in that** the restoring force which is provided by the elastic arrangement (68) is sufficient, until a limiting centrifugal force and/or a limiting rotational speed which act/acts on the sliding-face region (78) are/is reached, to hold the sliding-face region (78) of the at least one supporting element (36) out of bearing contact with the corresponding sliding-face region (62) which is provided on the supporting region (38).

28. Torsional vibration damper according to one of Claims 1 to 27, **characterized in that** a friction device (80) is provided which generates a frictional force which counteracts a further relative rotation, at least after a limiting relative rotational angle between the primary side (12) and the secondary side (30) has been reached.

29. Torsional vibration damper according to one of Claims 1 to 28, **characterized in that** at least part of the supporting elements (36) are configured with fluid passages (255), of which each is flow-connected to an associated vaulted depression (214) of the supporting element (36).

30. Torsional vibration damper according to Claim 29, **characterized in that** the fluid passages (255) are provided in each case in the radial outer region of the supporting elements (36).

31. Torsional vibration damper according to Claim 29 or 30, **characterized in that** the fluid passages (255) are provided either as a channel on the radial outer side of the supporting element (36) or as through openings on the circumferential sides of the supporting element.

## Revendications

1. Amortisseur de vibrations de torsion, comprenant un côté primaire (12) et un côté secondaire (30) rotatif autour d'un axe de rotation (A) par rapport au côté primaire (12) contre l'action d'un ensemble (26) d'éléments d'amortissement, sachant qu'est associé à l'ensemble (26) d'éléments d'amortissement, pour le soutien radialement vers l'extérieur par rapport au côté primaire (12) et/ou au côté secondaire (30), au moins un élément de soutien (36) qui est soutenu sur le côté primaire (12) et/ou sur le côté secondaire (30) par l'intermédiaire d'un ensemble de rouleaux (44), **caractérisé en ce que** l'élément de soutien (36) au moins unique présente une région (78) de surface de glissement qui, en fonction de la force centrifuge, peut être amenée en et hors de contact avec une région (62) de contre-surface de glissement sur le côté primaire (12) et/ou sur le côté secondaire (30).

2. Amortisseur de vibrations de torsion selon la revendication 1, **caractérisé en ce qu'**une région de soutien (38) s'étendant en direction circonférentielle autour de l'axe de rotation (A) est prévue sur le côté primaire (12) et/ou sur le côté secondaire (30), région le long de laquelle est mobile l'élément de soutien (36) au moins unique, sachant que la région de soutien (38) fournit une région (56) de surface de roulement et la région (62) de contre-surface de glissement, et que la région (56) de surface de roulement peut être déplacée par rapport à la région (62) de contre-surface de glissement en fonction de la force centrifuge.

3. Amortisseur de vibrations de torsion selon la revendication 2, **caractérisé en ce que** la région (56) de surface de roulement comprend au moins un élément (64) de surface de roulement, qui est porté à déplacement essentiellement radial sur une structure porteuse (18) à l'encontre de la force de rappel d'un ensemble élastique (68).

4. Amortisseur de vibrations de torsion selon la revendication 3, **caractérisé en ce que** l'ensemble élastique (68) fournit une force de rappel qui est pour l'essentiel opposée à une force centrifuge agissant sur l'élément de soutien (36) au moins unique.

5. Amortisseur de vibrations de torsion selon la revendication 3 ou 4, **caractérisé en ce que** la force de rappel fournie par l'ensemble élastique (68) suffit, jusqu'à l'atteinte d'une vitesse limite de rotation et/ou d'une force centrifuge limite agissant sur l'élément de soutien (36) au moins unique, à maintenir la région (78) de surface de glissement hors de contact d'application avec la région (62) de contre-surface de glissement.

6. Amortisseur de vibrations de torsion selon l'une quelconque des revendications 2 à 5, **caractérisé en ce que** la région (62) de contre-surface de glissement présente une partie de surface respective (58, 60) de part et d'autre de la région (56) de surface de roulement en direction axiale.

7. Amortisseur de vibrations de torsion selon la revendication 3 et la revendication 6, **caractérisé en ce qu'**il est prévu, entre les parties de surface (58, 60) de la région (62) de contre-surface de glissement, un évidement (66) recevant l'élément (64) de surface de roulement au moins unique et l'ensemble élastique (68).

8. Amortisseur de vibrations de torsion selon l'une quelconque des revendications 2 à 7, **caractérisé en ce que** l'ensemble de rouleaux (44) comprend une pluralité d'organes de roulement (42) qui, lors du mouvement circonférentiel de l'élément de soutien (36) au moins unique, peuvent être déplacés dans une plage de déplacement limitée par rapport à un corps (40) d'élément de soutien de l'élément de soutien (36) au moins unique, dans la direction du mouvement circonférentiel de ce dernier, et dont la poursuite du mouvement de roulement est bloquée à l'atteinte d'une extrémité de la plage de déplacement.

9. Amortisseur de vibrations de torsion selon la revendication 8, **caractérisé en ce que** l'ensemble de rouleaux (44) est soutenu par rapport à la région de soutien (38) par l'intermédiaire d'un coulisseau de roulement (122), et **en ce que**, à l'atteinte de l'extrémité de la plage de déplacement et tandis que le mouvement circonférentiel de l'élément de soutien (36) au moins unique se poursuit, ce dernier entraîne avec lui le coulisseau de roulement associé (122) pour effectuer un mouvement de glissement le long de la région de soutien (38).

10. Amortisseur de vibrations de torsion selon la revendication 1, **caractérisé en ce que** l'ensemble de rouleaux (44) comprend au moins un organe de roulement (42) porté sur un corps (40) d'élément de soutien par l'intermédiaire d'un ensemble élastique (68), organe par lequel l'élément de soutien (36) au moins unique peut être déplacé le long d'une région de soutien (38) s'étendant autour de l'axe de rotation (A) sur le côté primaire (12) et/ou sur le côté secondaire (30), sachant que l'ensemble élastique (68) fournit une force de rappel qui, contre l'action de la force centrifuge, maintient le corps (40) d'élément de soutien, avec la région (78) de surface de glissement prévue sur lui, hors de contact d'application avec la région de soutien (38) fournissant la région (62) de contre-surface de glissement.

11. Amortisseur de vibrations de torsion selon la revendication 10, **caractérisé en ce que** l'organe de roulement (42) au moins unique est porté sur un support (100) d'organe de roulement, et **en ce que** le support (100) d'organe de roulement porte le corps (40) d'élément de soutien par l'intermédiaire de l'ensemble élastique (68).

12. Amortisseur de vibrations de torsion selon la revendication 10 ou 11, **caractérisé en ce que** la force de rappel fournie par l'ensemble élastique (68) suffit, jusqu'à l'atteinte d'une vitesse limite de rotation et/ou d'une force centrifuge limite agissant sur le corps (40) d'élément de soutien, à maintenir la région (78) de surface de glissement hors de contact d'application avec la région (62) de contre-surface de glissement.

13. Amortisseur de vibrations de torsion selon la revendication 10 ou 12, **caractérisé en ce que** l'ensemble élastique (68) est réalisé sous forme d'élément de ressort (90), qui dispose d'une pluralité de logements (204) destinés à recevoir chacun un axe (46) d'un organe de roulement (42), sachant qu'au moins une partie de ces logements (204) reçoivent l'axe associé (46) en solidarité de rotation.

14. Amortisseur de vibrations de torsion selon la revendication 13, **caractérisé en ce que** l'ensemble élastique (68) présente une partie de liaison (200) qui couple entre eux les logements (204) et qui est positionnée sur le corps (40) d'élément de soutien.

15. Amortisseur de vibrations de torsion selon la revendication 14, **caractérisé en ce que** la partie de liaison (200) est positionnée en direction circonférentielle entre deux logements respectifs (204) sur une butée radiale (218) du corps (40) d'élément de soutien qui est tournée vers la région de soutien.

16. Amortisseur de vibrations de torsion selon la revendication 14 ou 15, **caractérisé en ce qu'**au moins un moyen de positionnement (222), prévu sur l'élément de ressort (90) et donc sur l'ensemble de rouleaux (44), est associé à l'élément de liaison (200) pour le blocage au moins à l'encontre de mouvements en direction circonférentielle par rapport au corps (40) d'élément de soutien, moyen qui peut être amené en liaison fonctionnelle avec une butée circonférentielle correspondante (220) du corps (40) d'élément de soutien.

17. Amortisseur de vibrations de torsion selon la revendication 16, **caractérisé en ce que** le moyen de positionnement (222) est prévu à l'extrémité circonférentielle du logement respectif (204) d'un axe (46), et une butée circonférentielle (220) voisine en direction circonférentielle, formée sur le corps (40) d'élément de soutien, est respectivement associée à ce moyen de positionnement (222).

18. Amortisseur de vibrations de torsion selon l'une quelconque des revendications 13 à 17, **caractérisé en ce que** la disposition en solidarité de rotation de l'axe (46) de l'organe de roulement respectif (42) s'effectue par un engagement positif ou à force de cet axe (46) dans le logement correspondant (204).

19. Amortisseur de vibrations de torsion selon l'une quelconque des revendications 10 à 18, **caractérisé en ce qu'**un élément de recouvrement (234) aidant au blocage de l'ensemble de rouleaux (44) dans le corps (40) d'élément de soutien est associé au corps (40) d'élément de soutien.

20. Amortisseur de vibrations de torsion selon la revendication 19, **caractérisé en ce que** l'élément de recouvrement (234) est réalisé plus petit que le corps (40) d'élément de soutien en direction circonférentielle.

21. Amortisseur de vibrations de torsion selon la revendication 19 ou 20, **caractérisé en ce que** l'élément de recouvrement (234) est conçu optimisé en friction au moins sur son côté tourné vers la région (62) de contre-surface de glissement de la région de soutien (38).

22. Amortisseur de vibrations de torsion selon l'une quelconque des revendications 10 à 21, **caractérisé en ce que** l'élément de soutien (36) présente, sur son côté tourné vers la région de soutien (38), un évidement (246) pour l'introduction radiale de l'ensemble de rouleaux (44).

23. Amortisseur de vibrations de torsion selon l'une quelconque des revendications 10 à 21, **caractérisé en ce que** l'élément de soutien (36) dispose sur au moins un côté extérieur axial (242) d'ouvertures de montage (244) pour le passage d'un axe respectif (46) de l'ensemble de rouleaux (44), et présente en outre sur son côté tourné vers la région de soutien (38) un évidement (246) pour l'introduction radiale d'organes de roulement (42).

24. Amortisseur de vibrations de torsion selon l'une quelconque des revendications 1 à 23, **caractérisé en ce que** l'ensemble de rouleaux (44) dispose d'organes de roulement (42) qui sont respectivement disposés par l'intermédiaire d'un palier lisse (250) sur un axe associé (46) reçu en solidarité de rotation dans un corps (40) d'élément de soutien.

25. Amortisseur de vibrations de torsion selon la revendication 1, **caractérisé en ce qu'**une région de soutien (38) s'étendant en direction circonférentielle tout autour de l'axe de rotation (A) et pourvue de l'ensemble de rouleaux (44) présentant une pluralité d'organes de roulement (42) est prévue sur le côté primaire (12) et/ou sur le côté secondaire (30), sachant que l'élément de soutien (36) au moins unique peut, lors de la rotation relative entre le côté primaire (12) et le côté secondaire (30), être déplacé en direction circonférentielle sur les organes de roulement (42).

26. Amortisseur de vibrations de torsion selon la revendication 25, **caractérisé en ce que** l'élément de soutien (36) au moins unique présente une région (154) de surface de roulement et la région (78) de surface de glissement, qui est portée par l'intermédiaire d'un ensemble élastique (68) par rapport à la région (154) de surface de roulement, sachant que l'ensemble élastique (68) fournit une force de rappel s'opposant à une action de force centrifuge sur la région (78) de surface de glissement.

27. Amortisseur de vibrations de torsion selon la revendication 26, **caractérisé en ce que** la force de rappel fournie par l'ensemble élastique (68) suffit, jusqu'à l'atteinte d'une vitesse limite de rotation et/ou d'une force centrifuge limite agissant sur la région (78) de surface de glissement, à maintenir la région (78) de surface de glissement de l'élément de soutien (36) au moins unique hors de contact d'application avec la région (62) de contre-surface de glissement prévue sur la région de soutien (38).

28. Amortisseur de vibrations de torsion selon l'une quelconque des revendications 1 à 27, **caractérisé en ce qu'**il est prévu un système de friction (80) qui, au moins à l'atteinte d'un angle limite de rotation relative entre le côté primaire (12) et le côté secondaire (30), produit une force de friction s'opposant à la poursuite de la rotation relative.

29. Amortisseur de vibrations de torsion selon l'une quelconque des revendications 1 à 28, **caractérisé en ce qu'**au moins une partie des éléments de soutien (36) sont réalisés avec des passages de fluide (255), qui se trouvent chacun en liaison fluidique avec un renfoncement bombé associé (214) de l'élément de soutien (36).

30. Amortisseur de vibrations de torsion selon la revendication 29, **caractérisé en ce que** les passages de fluide (255) sont respectivement prévus dans la région extérieure radiale des éléments de soutien (36).

31. Amortisseur de vibrations de torsion selon la revendication 29 ou 30, **caractérisé en ce que** les passages de fluide (255) sont prévus soit sous la forme d'une rigole sur le côté extérieur radial de l'élément de soutien (36), soit sous la forme d'ouvertures de passage sur les côtés circonférentiels de l'élément de soutien.
